# EUROPEAN PATENT APPLICATION

(11) **EP 4 787 989 A1**
(43) Date of publication of application: **05.08.2026**
(21) Application number: 24881429.5
(22) Date of filing: 11.10.2024
(51) Int. Cl.: H04W 64/00

(54) **COMMUNICATION METHOD AND COMMUNICATION APPARATUS**

(30) Priority: 25.10.2023 CN 202311403974
(71) Applicant: HUAWEI TECHNOLOGIES CO., LTD., Shenzhen 518129 (CN)
(72) Inventor: LIU, Mengting, Shenzhen, Guangdong 518129 (CN); GAO, Xin, Shenzhen, Guangdong 518129 (CN); XIE, Xi, Shenzhen, Guangdong 518129 (CN)
(74) Representative: Pfenning, Meinig & Partner mbB
(86) International application number: PCT/CN2024/124187
(87) International publication number: WO 2025/087063

(57) **Abstract**

Embodiments of this application relate to the communication field, and disclose a communication method and a communication apparatus, to reduce power consumption and complexity of a terminal device. The method includes: receiving positioning assistance information, where the positioning assistance information indicates that first configuration information is associated with second configuration information, the first configuration information includes configuration information of a first reference signal sent by a first network device, and the second configuration information includes configuration information of a second reference signal sent by a second network device; and performing at least one of the following steps: receiving a reference signal from the first network device based on the first configuration information; or receiving a reference signal from the second network device based on the second configuration information. Embodiments of this application are used to position a terminal device.

## Description

This application claims priority to Chinese Patent Application No. 202311403974.X, filed with the China National Intellectual Property Administration on October 25, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

Generally, positioning methods for a terminal device include an uplink positioning method, a downlink positioning method, an uplink-downlink joint positioning method, and the like. The downlink positioning method is used as an example. The terminal device receives a downlink positioning reference signal from one or more positioning reference stations, and performs positioning measurement, to obtain location information of the terminal device. To perform downlink measurement, the terminal device needs to obtain corresponding assistance data, for example, a cell identifier, timing information of the reference station, downlink reference signal configuration information, and synchronization signal information of the reference station. The positioning reference station herein is, for example, a terrestrial base station in a cellular positioning scenario or a satellite (or an air base station) in a satellite system. The downlink reference signal configuration information includes beam information, for example, a reference signal resource identifier, associated with a positioning reference signal resource.

In the satellite system, the satellite moves at a high speed, and a terrestrial cell covered by the satellite moves fast. As a result, a beam associated with the positioning reference signal resource and to be measured by the terminal device changes frequently. In addition, a quantity of beams of the satellite is large. If the positioning assistance data is updated in real time, the terminal device needs to frequently receive the assistance data, resulting in high power consumption of the terminal device. In addition, the terminal device needs to measure reference signals of a plurality of satellites in a plurality of beam directions to obtain sufficient measurement quantities for positioning. This also causes a problem of high power consumption and complexity of the terminal device. In a cellular system, a similar problem also exists in a high-speed movement scenario (for example, a high-speed railway), a high-frequency positioning scenario, and the like of the terminal device.

### SUMMARY

Embodiments of this application provide a communication method and a communication apparatus, to reduce power consumption and complexity of a terminal device.

According to a first aspect, a communication method is provided. Optionally, the method may be performed by a terminal device, a component or an apparatus (for example, a processor, a chip, or a chip system) used in a terminal device, or a logical module or software that can implement all or some functions of a terminal device. The method includes: receiving positioning assistance information, where the positioning assistance information indicates that first configuration information is associated with second configuration information, the first configuration information includes configuration information of a first reference signal sent by a first network device, and the second configuration information includes configuration information of a second reference signal sent by a second network device; and performing at least one of the following steps: receiving a reference signal from the first network device based on the first configuration information; or receiving a reference signal from the second network device based on the second configuration information.

The method may be applied to a terrestrial network and a non-terrestrial network. The terrestrial network is, for example, a 5G network, and an architecture of the non-terrestrial network is, for example, a transparent architecture and a regenerative architecture that include satellites. The method may be performed by a terminal device that communicates with a radio access network in a network. The first reference signal and the second reference signal may be understood as positioning reference signals, or signals that can be used for positioning. The reference signal from the first network device and the reference signal from the second network device that are received by the terminal device may also be positioning reference signals. The first network device may be a serving network device of the terminal device, and the second network device may be a neighboring-cell network device of the terminal device. There may be a plurality of second network devices.

Therefore, in this application, when the positioning assistance information sent by a network side indicates that the configuration information of the first reference signal of the current serving network device (the first network device) is associated with the configuration information of the second reference signal of the neighboring-cell network device (the second network device), when the terminal device performs positioning, the terminal device may receive the reference signal from the first network device based on the first configuration information, and the terminal device may receive the reference signal from the second network device based on the second configuration information and information indicating the association between the first configuration information and the second configuration information. In this way, the terminal device can clearly know reference signals of the second network device in specific directions that are to be received, or reference signals in specific beam directions that are to be received. Compared with a problem that the terminal device needs to perform blind measurement on a reference signal, that is, needs to measure reference signals of a plurality of network devices in a plurality of beam directions to obtain sufficient measurement quantities for positioning, causing high power consumption of the terminal device, in the implementation in which reception is performed in a beam direction indicated by associated configuration information and blind measurement does not need to be performed on reference signals of a plurality of network devices in a plurality of beam directions in this application, power consumption of the terminal device is low, and implementation complexity is low. For example, for application to a positioning scenario of a satellite system, considering that a network knows ephemeris information of a satellite, reference signals of specific satellites in specific directions that need to be measured by the terminal device in a future time period may be determined based on a movement direction of the satellite, and the network device may send, to the terminal device, the positioning assistance information indicating the association between the first configuration information and the second configuration information. Compared with a problem that power consumption of the terminal device is high because the terminal device needs to perform blind measurement on reference signals of a plurality of satellites in a plurality of beam directions to obtain sufficient measurement quantities for positioning, in the implementation in which the terminal device may receive, from a serving satellite and a neighboring-cell satellite, a reference signal in a direction indicated by associated configuration information, and does not need to perform blind measurement on reference signals of a plurality of satellites in a plurality of beam directions in this application, power consumption of positioning performed by the terminal device in the satellite system is low, and implementation complexity is low. In addition, the terminal device can perform positioning based on reference signals from a plurality of satellites, to ensure positioning performance.

In addition, when the terminal device moves fast or the network device moves fast, a beam that is associated with a positioning reference signal resource and that is to be measured by the terminal device changes frequently, and the terminal device needs to frequently receive positioning assistance data from the network device to receive a reference signal. Consequently, power consumption of the terminal device is high. In comparison, in the implementation in which the positioning assistance information indicates the associated configuration information in this application, when being within a cell coverage area of the first network device, the terminal device may receive the reference signal from the first network device based on the first configuration information, and receive the reference signal from the second network device based on the second configuration information associated with the first configuration information. When being within a cell coverage area of the second network device, the terminal device may receive the reference signal from the second network device based on the second configuration information, and receive the reference signal from the first network device based on the first configuration information associated with the second configuration information. The positioning assistance information does not need to be frequently updated, and the terminal device does not need to frequently receive the positioning assistance data from the network device. Therefore, signaling overheads are low, and power consumption of the terminal device is low. Optionally, the network device may send positioning assistance information to the terminal device at intervals of a period of time, and does not need to send positioning assistance data each time when a beam that is associated with a positioning reference signal resource and that is to be measured by the terminal device changes, so that power consumption of the terminal device is low. Especially, during application to a satellite system for positioning the terminal device, considering that a serving cell of the terminal device changes frequently due to fast movement of a satellite, a beam that is associated with a positioning reference signal resource and that is to be measured by the terminal device changes frequently, and the terminal device needs to frequently receive positioning assistance data. In the implementation in which reference signals from a plurality of satellites (a serving satellite and a neighboring-cell satellite) are received based on the associated first configuration information and second configuration information in this application, even if the neighboring-cell satellite becomes a serving satellite, the terminal device may receive reference signals of a plurality of satellites based on the associated first configuration information and second configuration information, and the terminal device does not need to receive positioning assistance data from the serving satellite again. Optionally, the satellite may send positioning assistance information to the terminal device at intervals of a period of time, and does not need to send positioning assistance data each time when a beam that is associated with a positioning reference signal resource and that is to be measured by the terminal device changes, so that power consumption of the terminal device is low.

In a possible design, the positioning assistance information includes the first configuration information and the second configuration information. In this way, the terminal device may receive a reference signal/positioning reference signal based on the first configuration information and the second configuration information in the received positioning assistance information and the first configuration information and the second configuration information, and power consumption and implementation complexity of the terminal device are low.

In a possible design, the first configuration information includes at least one of the following: resource information of the first reference signal; resource set information of the first reference signal; information about the first network device; frequency information of the first reference signal; a cell identifier corresponding to the first network device; or an index of the first reference signal.

In this way, when receiving a reference signal from the first network device within a cell coverage area of the first network device (a serving network device), the terminal device receives a positioning reference signal or a beam in a direction/beam direction indicated by, for example, the resource information of the first reference signal carried in the first configuration information. The terminal device does not need to perform blind measurement on reference signals of the first network device in a plurality of directions, and reception power consumption and measurement power consumption of the terminal device are low. For example, the resource information of the first reference signal is positioning reference signal resource information: a PRS resource ID. When receiving a PRS from the first network device, the terminal device receives a PRS/beam in a direction/beam direction indicated by the PRS resource ID from the first network device, and reception power consumption and measurement power consumption are low.

Similarly, in a possible design, the second configuration information includes at least one of the following: resource information of the second reference signal; resource set information of the second reference signal; information about the second network device; frequency information of the second reference signal; a cell identifier corresponding to the second network device; or an index of the second reference signal.

In this way, if the terminal device is within a cell coverage area of the first network device, and the second network device serves as a neighboring-cell network device, when receiving a reference signal from the second network device, the terminal may receive the reference signal from the second network device based on a direction/beam direction indicated by, for example, the resource information of the second reference signal carried in the second configuration information associated with the first configuration information. The terminal device does not need to perform blind measurement on reference signals of the second network device in a plurality of directions, and reception power consumption and measurement power consumption of the terminal device are low. For example, the resource information of the second reference signal is positioning reference signal resource information: a PRS resource ID. When receiving a PRS from the second network device, the terminal device receives a PRS/beam in a direction/beam direction indicated by the PRS resource ID from the second network device, and reception power consumption and measurement power consumption are low.

In a possible design, the resource information of the first reference signal includes at least one of the following: a resource identifier of the first reference signal; beam information of the first reference signal; or angle information of the first reference signal.

Similarly, in a possible design, the resource information of the second reference signal includes at least one of the following: a resource identifier of the second reference signal; beam information of the second reference signal; or angle information of the second reference signal.

In other words, different reference signal resource identifiers, different reference signal beam information, or different reference signal angle information means beams in different directions. When receiving the reference signals from the first network device and the second network device, the terminal device may receive a plurality of beams in different directions for positioning. In this way, the terminal device may receive beams from the first network device and the second network device in a plurality of directions based on information indicating beams in different directions, so that sufficient beams can be received for positioning, power consumption of the terminal device is low, and positioning performance of the terminal device can be ensured.

In a possible design, the reference signal is at least one of the following: a positioning reference signal PRS; or a synchronization signal and physical broadcast channel (physical broadcast channel, PBCH) block SSB. In this way, when receiving a PRS or an SSB used for positioning, the terminal device may receive a PRS or an SSB that is from the first network device and that is indicated in the positioning assistance information, and a PRS or an SSB that is from the second network device and that is associated with the PRS or the SSB of the first network device, and perform positioning measurement based on the received PRS or SSB. For the terminal device, reception power consumption when the terminal device receives the PRS or the SSB used for positioning can be reduced, measurement power consumption for performing positioning measurement by the terminal device is also reduced, and complexity of performing positioning by the terminal device is low.

In a possible design, the positioning assistance information indicates that a PRS from the first network device is associated with a PRS or an SSB from the second network device. In this way, the terminal device may receive, based on the positioning assistance information, a PRS from the first network device and a PRS that is from the second network device and that is associated with the PRS of the first network device, to perform positioning measurement, or receive, based on the positioning assistance information, a PRS from the first network device and an SSB that is from the second network device and that is associated with the PRS of the first network device, to perform positioning measurement, so that reception power consumption and measurement power consumption of the terminal device are low.

In a possible design, receiving the positioning assistance information includes: receiving the positioning assistance information from the first network device. For example, the first network device is a serving network device of the terminal device, for example, a serving base station. The serving base station is, for example, a base station in a terrestrial cellular network or a serving satellite (or an air base station) in a satellite system. For example, the terminal device may receive, by using a broadcast message, the positioning assistance information sent by the first network device. In this way, power consumption of receiving, by the terminal device, a positioning reference signal can be reduced regardless of the terrestrial cellular network or the satellite system.

In a possible design, receiving the positioning assistance information includes: receiving the positioning assistance information from a location management function network element. The location management function network element may be a location management function (location management function, LMF) network element, and the LMF network element is used in a terrestrial cellular network or a satellite system. The terminal device may directly receive the positioning assistance information from the LMF network element by using a unicast message, or the terminal device may receive the positioning assistance information from the LMF network element through the first network device serving as a serving network device, so that the terminal device receives, based on the positioning assistance information, an associated reference signal indicated by the positioning assistance information.

According to a second aspect, a communication method is provided, including: determining positioning assistance information, where the positioning assistance information indicates that first configuration information is associated with second configuration information, the first configuration information includes configuration information of a first reference signal sent by a first network device, and the second configuration information includes configuration information of a second reference signal sent by a second network device; and sending the positioning assistance information.

Optionally, the positioning assistance information is used by a terminal device to perform at least one of the following steps: receiving a reference signal from the first network device based on the first configuration information; or receiving a reference signal from the second network device based on the second configuration information.

The second aspect may be performed by the first network device. The first network device is a serving network device of the terminal device, that is, the first network device determines the positioning assistance information, and sends the positioning assistance information to the terminal device. Alternatively, the second aspect may be performed by an LMF network element, that is, the LMF network element determines the positioning assistance information, and sends the positioning assistance information to the terminal device. Alternatively, the second aspect may be performed by a component (for example, a processor, a chip, or a chip system) in the first network device or the LMF network element, or a logical module or software that can implement all or some functions of the first network device or the LMF network element.

For beneficial effects of the second aspect and the possible designs of the second aspect, refer to descriptions of the beneficial effects of the first aspect.

In a possible design, the positioning assistance information includes the first configuration information and the second configuration information.

In a possible design, the first configuration information includes at least one of the following: resource information of the first reference signal; resource set information of the first reference signal; information about the first network device; frequency information of the first reference signal; a cell identifier corresponding to the first network device; or an index of the first reference signal.

In a possible design, the resource information of the first reference signal includes at least one of the following: a resource identifier of the first reference signal; beam information of the first reference signal; or angle information of the first reference signal.

In a possible design, the reference signal is at least one of the following: a positioning reference signal PRS; or a synchronization signal and physical broadcast channel PBCH block SSB.

In a possible design, the positioning assistance information indicates that a PRS sent by the first network device is associated with a PRS or an SSB sent by the second network device.

In a possible design, sending the positioning assistance information includes: sending the positioning assistance information to the terminal device.

According to a third aspect, a communication method is provided. The method includes: sending direction information of a terminal device, where the direction information is used by at least one network device to determine configuration information of a positioning reference signal; and receiving the positioning reference signal from the at least one network device.

The third aspect may be performed by a terminal device or a serving network device of the terminal device. Alternatively, the third aspect may be performed by a component (for example, a processor, a chip, or a chip system) in the terminal device or the serving network device of the terminal device, or a logical module or software that can implement all or some functions of the terminal device or the serving network device of the terminal device. The serving network device may be a base station in a terrestrial cellular network or a satellite in a satellite system. For example, when the terminal device performs the method, the terminal device may send the direction information of the terminal device to an LMF network element. When the serving network device performs the method, the serving network device sends the direction information of the terminal device to an LMF network element. Then, the LMF network element may directly send the direction information of the terminal device to the at least one network device, and the at least one network device may determine, based on the direction information of the terminal device, a beam direction for sending the positioning reference signal to the terminal device. Alternatively, the LMF network element determines the configuration information of the positioning reference signal based on the direction information of the terminal device, and sends the configuration information of the positioning reference signal to the at least one network device. Different configuration information of positioning reference signals corresponds to different transmit beam directions. This is equivalent to that the LMF network element indicates the at least one network device to adjust a beam direction for sending the positioning reference signal. The at least one network device includes network devices of a serving cell and a neighboring cell of the terminal device.

Therefore, in this application, for the terminal device, the reported direction information of the terminal device can help the serving network device/LMF network element determine beam directions of positioning reference signals of network devices of a serving cell and a neighboring cell, so that the network devices of the serving cell and the neighboring cell adjust directions for sending positioning reference signals to point to a receiving direction of the terminal device. This helps the terminal device receive sufficient positioning reference signals from the serving cell and the neighboring cell within short time, thereby improving positioning performance and positioning precision of the terminal device, and reducing a positioning delay of the terminal device.

According to a fourth aspect, a communication method is provided. The method includes: receiving direction information of a terminal device, where the direction information is used by at least one network device to determine configuration information of a positioning reference signal; and sending the positioning reference signal.

The fourth aspect may be performed by a serving network device of the terminal device or an LMF network element. Alternatively, the fourth aspect may be performed by a component (for example, a processor, a chip, or a chip system) in the serving network device of the terminal device or the LMF network element, or a logical module or software that can implement all or some functions of the serving network device of the terminal device or the LMF network element. For beneficial effects of the fourth aspect, refer to the descriptions of the beneficial effects of the third aspect.

In the third aspect and the fourth aspect:
In a possible design, the direction information includes at least one of the following information: receive beam direction information of the terminal device; transmit beam direction information of the terminal device; angle information of the terminal device relative to the at least one network device; or location information of the terminal device.

In other words, when the serving network device/LMF network element determines the direction information of the terminal device, beam information of a positioning reference signal corresponding to the direction information of the terminal device may be determined based on the direction information of the terminal device. A transmit beam direction corresponding to the beam information points to a receive beam direction corresponding to the direction information of the terminal device. This helps the terminal device receive sufficient positioning reference signals from the serving cell and the neighboring cell within short time.

In a possible design, the at least one network device includes a first network device and at least one second network device; first configuration information of the first network device is associated with second configuration information of the at least one second network device; and the first configuration information includes configuration information of a first reference signal sent by the first network device, and the second configuration information includes configuration information of a second reference signal sent by the second network device. Both the first reference signal and the second reference signal may be positioning reference signals.

That is, the first aspect and the third aspect may be applied in combination. The terminal device may receive the positioning assistance information, and determine, based on the first configuration information in the positioning assistance information and the second configuration information associated with the first configuration information, a beam direction for receiving a positioning reference signal. The terminal device may further send the direction information of the terminal device to a network side, so that when the at least one network device sends the positioning reference signal to the terminal device, the at least one network device determines a transmit beam direction for sending the positioning reference signal. For example, the beam direction for sending the positioning reference signal by the at least one network device is aligned with a beam direction for receiving the positioning reference signal by the terminal device. This helps the terminal device receive sufficient positioning reference signals from the serving cell and the neighboring cell within short time, thereby improving positioning performance.

In a possible design, the first network device is a serving network device of the terminal device. For example, the serving network device may be a serving base station in a terrestrial cellular network or a serving satellite in a satellite system. When the terminal device is in a cell range of the serving base station or the serving satellite, the terminal device may receive, from the serving base station or the serving satellite, the configuration information of the first reference signal and the configuration information that is of the second reference signal and that is associated with the configuration information of the first reference signal. This helps the terminal device determine the beam information for receiving the positioning reference signal, and reduces positioning reference signal reception power consumption and measurement power consumption of the terminal device.

According to a fifth aspect, a communication apparatus is provided, including: a receiving unit, configured to receive positioning assistance information, where the positioning assistance information indicates that first configuration information is associated with second configuration information, the first configuration information includes configuration information of a first reference signal sent by a first network device, and the second configuration information includes configuration information of a second reference signal sent by a second network device. The receiving unit is further configured to perform at least one of the following steps: receiving a reference signal from the first network device based on the first configuration information; or receiving a reference signal from the second network device based on the second configuration information.

In a possible design, the positioning assistance information includes the first configuration information and the second configuration information.

In a possible design, the first configuration information includes at least one of the following: resource information of the first reference signal; resource set information of the first reference signal; information about the first network device; frequency information of the first reference signal; a cell identifier corresponding to the first network device; or an index of the first reference signal.

In a possible design, the resource information of the first reference signal includes at least one of the following: a resource identifier of the first reference signal; beam information of the first reference signal; or angle information of the first reference signal.

In a possible design, the reference signal is at least one of the following: a positioning reference signal PRS; or a synchronization signal and physical broadcast channel PBCH block SSB.

In a possible design, the positioning assistance information indicates that a PRS from the first network device is associated with a PRS or an SSB from the second network device.

In a possible design, the receiving unit is configured to receive the positioning assistance information from the first network device.

In a possible design, the receiving unit is configured to receive the positioning assistance information from a location management function network element.

According to a sixth aspect, a communication apparatus is provided, including: a determining unit, configured to determine positioning assistance information, where the positioning assistance information indicates that first configuration information is associated with second configuration information, the first configuration information includes configuration information of a first reference signal sent by a first network device, and the second configuration information includes configuration information of a second reference signal sent by a second network device; and a sending unit, configured to send the positioning assistance information.

Optionally, the positioning assistance information is used by a terminal device to perform at least one of the following steps: receiving a reference signal from the first network device based on the first configuration information; or receiving a reference signal from the second network device based on the second configuration information.

In a possible design, the positioning assistance information includes the first configuration information and the second configuration information.

In a possible design, the first configuration information includes at least one of the following: resource information of the first reference signal; resource set information of the first reference signal; information about the first network device; frequency information of the first reference signal; a cell identifier corresponding to the first network device; or an index of the first reference signal.

In a possible design, the resource information of the first reference signal includes at least one of the following: a resource identifier of the first reference signal; beam information of the first reference signal; or angle information of the first reference signal.

In a possible design, the reference signal is at least one of the following: a positioning reference signal PRS; or a synchronization signal and physical broadcast channel PBCH block SSB.

In a possible design, the positioning assistance information indicates that a PRS sent by the first network device is associated with a PRS or an SSB sent by the second network device.

In a possible design, the sending unit is configured to send the positioning assistance information to the terminal device.

According to a seventh aspect, a communication apparatus is provided, including: a sending unit, configured to send direction information of a terminal device, where the direction information is used by at least one network device to determine configuration information of a positioning reference signal; and a receiving unit, configured to receive the positioning reference signal from the at least one network device.

In a possible design, the direction information includes at least one of the following information: receive beam direction information of the terminal device; transmit beam direction information of the terminal device; angle information of the terminal device relative to the at least one network device; or location information of the terminal device.

In a possible design, the at least one network device includes a first network device and at least one second network device; first configuration information of the first network device is associated with second configuration information of the at least one second network device; and the first configuration information includes configuration information of a first reference signal sent by the first network device, and the second configuration information includes configuration information of a second reference signal sent by the second network device.

In a possible design, the first network device is a serving network device of the terminal device.

According to an eighth aspect, a communication apparatus is provided, including: a receiving unit, configured to receive direction information of a terminal device, where the direction information is used by at least one network device to determine configuration information of a positioning reference signal; and a sending unit, configured to send the positioning reference signal.

In a possible design, the direction information includes at least one of the following information: receive beam direction information of the terminal device; transmit beam direction information of the terminal device; angle information of the terminal device relative to the at least one network device; or location information of the terminal device.

In a possible design, the at least one network device includes a first network device and at least one second network device; first configuration information of the first network device is associated with second configuration information of the at least one second network device; and the first configuration information includes configuration information of a first reference signal sent by the first network device, and the second configuration information includes configuration information of a second reference signal sent by the second network device.

In a possible design, the first network device is a serving network device of the terminal device.

According to a ninth aspect, a communication apparatus is provided, including a module configured to perform the method according to any one of the possible designs of the first aspect to the fourth aspect.

According to a tenth aspect, a communication apparatus is provided, including one or more processors. The processor is configured to perform the method according to any one of the possible designs of the first aspect to the fourth aspect.

In an optional manner, the communication apparatus further includes a memory. The processor is coupled to the memory, and the processor is configured to run a computer program or instructions stored in the memory, to enable the communication apparatus to perform the method according to any one of the possible designs of the first aspect to the fourth aspect.

According to an eleventh aspect, a computer-readable storage medium is provided. The computer-readable storage medium stores computer instructions, and when the computer instructions are run on a communication apparatus, the communication apparatus is enabled to perform the method according to any one of the possible designs of the first aspect to the fourth aspect.

According to a twelfth aspect, a computer program product is provided, including computer instructions. When the computer instructions are run on a communication apparatus, the communication apparatus is enabled to perform the method according to any one of the possible designs of the first aspect to the fourth aspect.

According to a thirteenth aspect, a communication system is provided, including a first communication apparatus and a second communication apparatus. The first communication apparatus is configured to perform the method according to any one of the first aspect and the possible designs of the first aspect, and the second communication apparatus is configured to perform the method according to any one of the second aspect and the possible designs of the second aspect. Alternatively, the first communication apparatus is configured to perform the method according to any one of the third aspect and the possible designs of the third aspect, and the second communication apparatus is configured to perform the method according to any one of the fourth aspect and the possible designs of the fourth aspect.

It may be understood that any terminal device, network device, communication apparatus, chip, computer-readable storage medium, computer program product, or the like provided above may be applied to the corresponding method provided above. Therefore, for beneficial effects that can be achieved, refer to the beneficial effects in the corresponding method. Details are not described herein again.

### BRIEF DESCRIPTION OF DRAWINGS

FIG. 1 is a diagram of a positioning communication architecture based on a 5G core network in LTE and NR according to an embodiment of this application;
FIG. 2a and FIG. 2b are diagrams of architectures in which an NTN has a transparent architecture and a regenerative architecture according to an embodiment of this application;
FIG. 3 is a diagram of a PRS beam to be measured by a terminal device according to an embodiment of this application;
FIG. 4 is a schematic flowchart of a communication method according to an embodiment of this application;
FIG. 5 is a diagram of a beam association according to an embodiment of this application;
FIG. 6 is a schematic flowchart of a communication method according to an embodiment of this application;
FIG. 7 is a diagram of adjusting, based on direction information of UE, a beam direction for sending a PRS by a satellite according to an embodiment of this application;
FIG. 8 is a diagram of a structure of a communication apparatus according to an embodiment of this application; and
FIG. 9 is a diagram of a structure of a communication apparatus according to an embodiment of this application.

### DESCRIPTION OF EMBODIMENTS

For ease of understanding, examples of descriptions of some concepts related to embodiments of this application are provided as follows for reference.

### 1. Reference signal in a positioning scenario

Downlink positioning reference signal (downlink positioning reference signal, DL-PRS): may be used in a radio access technology-dependent (radio access technology, RAT-dependent) positioning service in new radio (new radio, NR), for example, may be used in a downlink positioning method and an uplink-downlink joint positioning method.

Uplink sounding reference signal (uplink sounding reference signal, UL-SRS): In a broad sense, the UL-SRS includes a multiple-input multiple-output (multiple-input multiple-output, MIMO) uplink reference signal MIMO-SRS (R15 and earlier releases), and an uplink positioning reference signal dedicated to positioning (that is, pos-SRS proposed in R16).

Both the MIMO-SRS and the pos-SRS may be used in an uplink positioning method and an uplink-downlink joint positioning method. When being used for positioning, the UL-SRS may also be referred to as an uplink positioning reference signal.

Positioning reference signal (positioning reference signal, PRS): includes a downlink positioning reference signal DL-PRS and an uplink positioning reference signal UL-SRS.

Sidelink positioning reference signal (sidelink PRS): is a positioning reference signal transmitted on a sidelink and dedicated to a sidelink scenario.

### 2. Transmission point, reception point, and transmission-reception point

Transmission point (transmission point, TP): may also be referred to as a transmission node, a sending node, or the like. The TP may represent a group of transmit antennas (for example, an antenna array (having one or more antenna elements)) that are geographically located at a same location. This concept is applicable to a cell, a part of a cell, or a TP that supports only a DL-PRS. The TP may include an antenna of a base station, a remote radio module (remote radio heads), a remote antenna of a base station, an antenna of a TP supporting only a DL-PRS, or the like. One cell may include one or more TPs.

Reception point (reception point, RP): may also be referred to as a reception node. The RP represents a group of receive antennas (for example, an antenna array (having one or more antenna elements)) that are geographically located at a same location. This concept is applicable to a cell, a part of a cell, or an RP that supports only a UL-SRS. The RP may include an antenna of a base station, a remote radio module, a remote antenna of a base station, an antenna of an RP supporting only a UL-SRS, or the like. One cell may include one or more RPs.

Transmission-reception point (transmission-reception point, TRP): represents a group of antennas (for example, an antenna array (having one or more antenna elements)) that are geographically located at a same location and support at least one of a TP function or an RP function.

The base station may be, for example, a next-generation LTE base station (next-generation eNodeB, ng-eNB) or a next-generation NodeB (next-generation NodeB, gNB).

### 3. Type of a positioning method

Depending on whether a network device side or a terminal device side is selected to send a reference signal, positioning methods may be classified into the following three types:

Downlink positioning method: is a downlink-based positioning method. To be specific, a network device side sends a downlink positioning reference signal DL-PRS, and a terminal device side performs positioning measurement, to obtain a positioning result of a terminal device.

Uplink positioning method: is an uplink-based positioning method. To be specific, a terminal device side sends an uplink positioning reference signal UL-SRS, and a network device side performs positioning measurement, to obtain a positioning result of a terminal device.

Uplink-downlink joint positioning method: is a positioning method based on an uplink and a downlink. To be specific, a network device side and a terminal device side each need to send a positioning reference signal, the terminal device side and the network device side separately perform corresponding measurement, and a terminal device or a network device obtains a positioning result of the terminal device.

### 4. Algorithm type in a positioning method

For example, a terminal device is user equipment (user equipment, UE). According to different location calculation sides, algorithms of positioning methods are mainly classified into the following three types:

UE-based positioning method: UE is responsible for location calculation (if there is positioning assistance data) and may further provide a measurement result of the UE.

UE-assisted/LMF-based positioning method: UE only provides measurement and does not perform location calculation. A location management function (location management function, LMF) network element is responsible for location calculation (if there is positioning assistance data).

Standalone positioning method: UE performs measurement and location calculation without network positioning assistance data.

### 5. Satellite classification

Satellites may be classified into the following three categories based on different altitudes of orbits:

Low earth orbit (low earth orbit, LEO) satellite: is referred to as a "LEO satellite" for short, and has an orbit altitude of about 300 km to 1500 km. Most of earth observation satellites, geodesic satellites, space stations, and some new communication satellite systems use low earth orbit satellites, which feature a low delay, low costs, flexible networking, and the like.

Medium earth orbit (middle earth orbit, MEO): is referred to as a "MEO satellite" for short, has an orbit altitude of about 7000 km to 25000 km, and is usually used for television forwarding, navigation, and the like.

Geostationary earth orbit (geosynchronous earth orbit, GEO): is referred to as a "GEO satellite" for short, has an orbit altitude of about 35786 km, and is usually used for remote sensing, a satellite phone, and the like.

The following describes technical solutions in embodiments of this application with reference to the accompanying drawings in embodiments of this application. In the descriptions of embodiments of this application, "/" means "or", unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions of embodiments of this application, "a plurality of" means two or more. In the descriptions of embodiments of this application, "determine" may be replaced with "generate", "send" may be replaced with "output", and "receive" may be replaced with "input".

The following terms "first" and "second" are merely used for description, but should not be understood as indicating or implying relative importance or implying a quantity of indicated technical features. Therefore, a feature limited by "first" or "second" may explicitly or implicitly include one or more features.

Embodiments of this application may be applied to a non-terrestrial network (non-terrestrial network, NTN) or an international mobile telecommunications (international mobile telecommunications, IMT) system. The IMT system may be, for example, a long term evolution (long term evolution, LTE) or NR communication system, or may be a communication scenario other than the two types of communication systems, for example, a future 6G communication system.

In some scenarios, embodiments of this application may be applied to a scenario in which the NTN or the IMT system is used to position a terminal device.

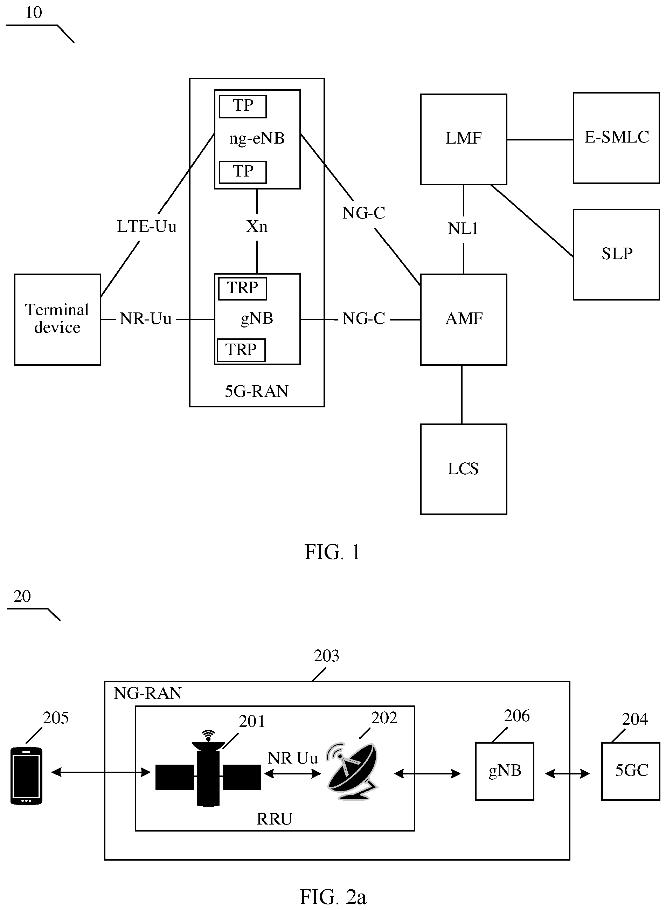

FIG. 1 is a diagram of a positioning communication architecture 10 based on a 5G core network in LTE and NR. The communication architecture 10 includes a 5G core network, an LMF network element, a 5G radio access network (5G radio access network, 5G-RAN), and a terminal device. In a positioning scenario, the 5G core network includes an access and mobility management function (access and mobility management function, AMF) network element, a location service (location services, LCS) network element, and the like. The 5G-RAN includes at least one RAN node.

The AMF network element may receive, from the LCS network element, a location service request related to the terminal device, or the AMF network element may start some location services on behalf of the terminal device, and forward a location service request to the LMF network element. After obtaining location information returned by the terminal device, the AMF network element feeds back the related location information to the LCS network element.

The LMF network element is responsible for supporting different types of location services of the terminal device, including positioning the terminal device and transferring assistance data to the terminal device. A control plane of the LMF network element is an enhanced serving mobile location center (NR positioning protocol annex, NRPPa) message for information exchange, for example, obtaining configuration information for a PRS and an SRS. The LMF network element performs transfer of the terminal device's capability information, assistance data, measurement information, and the like with the terminal device via an LTE positioning protocol (LTE positioning protocol, LPP) message. The LMF network element may have another name. This is not limited in this application. Therefore, the LMF network element may be replaced with a core network device having a positioning function.

The RAN node may be, for example, a gNB/ng-eNB, a next-generation base station in a 6th generation (6th generation, 6G) mobile communication system, or a base station in a future mobile communication system. The RAN node may alternatively be a macro base station, may be a micro base station or an indoor base station, or may be a relay node or a donor node. As shown in FIG. 1, in some scenarios, when the RAN node is a gNB/ng-eNB in 5G, the gNB/ng-eNB may provide measurement information for the terminal device, and send the measurement information to the LMF network element.

In another application scenario, a plurality of RAN nodes may cooperate to help the terminal device implement radio access, and different RAN nodes separately implement some functions of the base station. For example, the RAN node may be a central unit (central unit, CU), a distributed unit (distributed unit, DU), or a radio unit (radio unit, RU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to related technical specifications of the 3rd generation partnership project (3rd generation partnership project, 3GPP). The RU may be configured to receive and send radio frequency signals. The CU and the DU may be two independent RAN nodes, or may be integrated into a same RAN node, for example, integrated into a baseband unit (baseband unit, BBU). The RU may be included in a radio frequency device, for example, included in a remote radio unit (remote radio unit, RRU) or an active antenna unit (active antenna unit, AAU). The CU may be further classified into two types of RAN nodes: a CU-control plane and a CU-user plane.

In different systems, the RAN node may have different names. For example, in an O-RAN system, the CU may be referred to as an open CU (open CU, O-CU), the DU may be referred to as an open DU (open DU, O-DU), and the RU may be referred to as an open RU (open RU, O-RU). The RAN node in embodiments of this application may be implemented by using a software module, a hardware module, or a combination of a software module and a hardware module. For example, the RAN node may be a server loaded with a corresponding software module. Neither of a specific technology and a specific device form used for the RAN node is limited in embodiments of this application. For ease of description, the following is described by using an example in which a base station is used as the RAN node.

The terminal device may measure a downlink signal from the 5G-RAN or another node, for example, a downlink positioning reference signal, and perform positioning based on the downlink signal.

In some scenarios, the terminal device may be, for example, UE, a mobile station, or a mobile terminal. The terminal device may be widely used in various scenarios, for example, device-to-device (device-to-device, D2D), vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearables, smart transportation, and smart city. The terminal may be a mobile phone, a tablet computer, a computer with wireless sending and receiving functions, a wearable device, a vehicle, an airplane, a ship, a robot, a robot arm, a smart home device, or the like. Neither of a specific technology and a specific device form used for the terminal is limited in embodiments of this application.

In an IMT system, the base station and the terminal device may be fixed or movable. The base station and the terminal device may be deployed on land, including an indoor or outdoor device, a handheld device, or a vehicle-mounted device; or may be deployed on a water surface; or may be deployed on a plane, a balloon, or an artificial satellite. Application scenarios of the base station and the terminal are not limited in embodiments of this application.

In the IMT system, roles of the base station and the terminal may be relative. For example, a helicopter or an uncrewed aerial vehicle may be configured as a mobile base station, and for a terminal accessing the radio access network through the uncrewed aerial vehicle, the terminal is a base station. However, for the base station, the uncrewed aerial vehicle is a terminal. In other words, communication between the base station and the uncrewed aerial vehicle is performed according to a radio air interface protocol. Certainly, communication between the base station and the uncrewed aerial vehicle may alternatively be performed according to an interface protocol between base stations. In this case, for the base station, the uncrewed aerial vehicle is also a base station. Therefore, both the base station and the terminal device may be collectively referred to as communication apparatuses.

In embodiments of this application, the function of the base station may alternatively be performed by a module (for example, a chip) in the base station, or may be performed by a control subsystem including the function of the base station. The control subsystem including the function of the base station herein may be a control center in the foregoing application scenarios such as smart grid, industrial control, smart transportation, and smart city. The function of the terminal device may alternatively be performed by a module (for example, a chip or a modem) in the terminal, or may be performed by an apparatus including the function of the terminal device.

In this application, the base station sends a downlink signal or downlink information to the terminal device, where the downlink information is carried on a downlink channel; and the terminal device sends an uplink signal or uplink information to the base station, where the uplink information is carried on an uplink channel. To communicate with the base station, the terminal device needs to establish a wireless connection with the base station in a cell covered by the base station. A cell covered by a base station that establishes a wireless connection with the terminal device is referred to as a serving cell of the terminal.

In the communication architecture 10, a plurality of positioning methods are studied for 5G terrestrial cellular positioning, including an uplink/downlink time difference of arrival (uplink/downlink time difference of arrival, UL/DL-TDOA), a downlink angle of departure (downlink angle of departure, DL-AOD), an uplink angle of arrival (uplink angle of arrival, UL-AOA), multiple round trip time (multiple round trip time, Multi-RTT), carrier phase positioning (carrier phase positioning, CPP), and the like. The UL/DL-TDOA and Multi-RTT algorithms are positioning technologies based on time of arrival. To be specific, a receiving end needs to measure time of arrival of a signal sent by a transmitting end, convert the time of arrival into distance information between the receiving end and the transmitting end, and finally obtain a location of the to-be-positioned target based on the distance information. The DL-AOD and UL-AOA are positioning technologies based on an angle. To be specific, a receiving end measures a transmit angle or an angle of arrival of a reference signal sent by a transmitting end, and then infers a location of a to-be-positioned target based on angle information of the receiving end and the transmitting end. The carrier phase positioning estimates a location of UE by using phase measurement quantities of signals sent by a plurality of base stations.

For a downlink positioning method, for example, DL-TDOA, a principle is to obtain a location of a terminal device by using a measurement quantity of a downlink positioning reference signal received by the terminal device from one or more positioning reference stations (for example, a base station) and location information of the one or more positioning reference stations. To perform downlink measurement, the terminal device needs to obtain corresponding positioning assistance data, such as a cell identifier (identity, ID), timing information of the positioning reference station, downlink reference signal configuration information, and synchronization signal information of the positioning reference station. For details, refer to the 3GPP protocol.

Table 1 shows an information example in which the positioning assistance data is the downlink reference signal configuration information.

**Table 1: Downlink positioning reference signal configuration information**

| Index | Maximum quantity | Typical parameter |
|---|---|---|
| Frequency layer (positioning frequency layer, PFL)/frequency | 1-4 | (1) Subcarrier spacing (subcarrier spacing, SCS) and bandwidth (bandwidth); |
| | | (2) start physical resource block (physical resource block, PRB), PointA, provider, and cyclic prefix (cyclic prefix, CP) information; and |
| | | (3) comb size (combSizeN) and the like. |
| TRP (base station) | Each PFL includes 1-64 TRPs | (1) Downlink positioning reference signal identifier (DL-PRS ID), physical cell identifier (PhysCellID), CellGlobalID, and the like; and |
| | | (2) NR-DL-PRS information. |
| Downlink positioning reference signal resource set (DL-PRS resource set) | Each TRP includes 1-8 downlink positioning reference signal resource sets | (1) Downlink positioning reference signal resource set identifier (DL-PRS resource set ID); |
| | | (2) resource set-level periodicity (periodicity) and slot offset (slot offset); |
| | | (3) resource repetition factor (resource repetition factor); |
| | | (4) resource time gap (resource time gap); |
| | | (5) resource number of symbols (resource number of symbols); and |
| | | (6) muting option (muting option), PRS transmit power, and the like. |
| Downlink positioning reference signal resource (DL-PRS resource)/beam | Each DL-PRS resource includes 1-64 downlink positioning reference signal resources | (1) Downlink positioning reference signal resource identifier (DL-PRS resource ID) (beam ID); |
| | | (2) sequence identifier (sequence ID); |
| | | (3) CombSizeN and offset; |
| | | (4) resource-level slot offset and symbol offset; and |
| | | (5) quasi-colocation (Quasi-Colocation, QCL) information and the like. |

Certainly, the information shown in Table 1 is some information in the downlink reference signal configuration information, and the downlink reference signal configuration information may further include information other than the information shown in Table 1.

For an NTN, compared with the conventional terrestrial network, the NTN uses a typical technology in which satellites and high-altitude platforms (satellites and high-altitude platforms, HAP) participate in network deployment. Typical application scenarios of the NTN include, for example, all-terrain coverage, signaling offloading, emergency communication, an internet of things, and a broadcast service. The NTN may include a space segment, a terrestrial segment, and a user segment. The space segment includes a satellite. The terrestrial segment may include a terrestrial station or a gateway station, a terrestrial base station, a core network device, and the like. The user segment may include a terminal device 222 of a plurality of forms of satellite systems deployed on land, on the sea, and in the air. For a type of the terminal device 222, refer to the foregoing descriptions of the terminal device.

When the NTN is used for satellite communication, the NTN may also be referred to as a satellite mobile communication system, and may perform satellite mobile communication. Satellite mobile communication may be understood as communication performed between radio communication stations on the earth (including the ground and the lower atmosphere layer) by using a satellite as a relay. A gateway is a link formed in a satellite system. The gateway station mainly provides an interface between the satellite mobile communication system and a terrestrial fixed communication network or a terrestrial mobile communication network to implement interconnection; and controls the satellite terminal device 222 to access the satellite mobile communication system, and ensures that a signal is not interrupted in a communication process of the terminal device 222.

When being used for satellite navigation, the NTN may be referred to as a satellite navigation system.

In some scenarios, the NTN is a communication technology that is formulated by 3GPP and that is between a terminal device and a satellite based on a new radio technology. With the evolution of standard versions and market requirements, NTNs can be classified into an IoT-NTN and an NR-NTN. Satellite communication based on the IoT-NTN, that is, an internet of things non-terrestrial network, mainly uses a geostationary earth orbit satellite. Satellite communication based on the NR-NTN, that is, an improved version based on 5G NR, mainly uses a low earth orbit satellite.

In comparison with a conventional terrestrial cellular network, a network architecture of the NTN has some differences from that of a conventional terrestrial cellular access network. However, overall, the NTN network architecture is similar to that of a 5G system, and still includes two parts: a 5GC and an NG-RAN. The 5GC includes, for example, an AMF network element and a user plane function (user plane function, UPF) network element, and a 5G RAN includes the NG-RAN. In a standardization process, two modes of a structure of the NG-RAN are discussed: a transparent architecture and a regenerative architecture.

FIG. 2a is a diagram of an architecture in which an NTN has a transparent architecture 20. The transparent architecture 20 includes an NG-RAN 203, a 5GC 204, and a terminal device 205. The NG-RAN 203 includes a satellite 201, an NTN gateway (gateway) 202, a gNB 206, and the like. The satellite 201 and the NTN gateway 202 may be understood as RRUs in NR. A function of the satellite 201 may be equivalent to that of a radio frequency relay. The satellite 201 may implement frequency conversion and a radio frequency amplifier in an uplink direction and a downlink direction. Both a service link and a feeder link of the satellite 201 use a 5G NR Uu interface. The NTN gateway 202 may be a gateway station, a terrestrial station, or the like. A transmission type of the transparent architecture 20 may be referred to as transparent transmission, which is equivalent to that the signal undergoes processes such as frequency conversion and signal amplification on a satellite. A transmission delay is a delay from the NTN gateway 202 to the terminal device 205 through the satellite 201. If the transparent architecture 20 is applied to a terminal device positioning scenario, a terrestrial base station in the 5G RAN 203 may send, to the terminal device 205 through the satellite 201, a reference signal used for positioning. The satellite 201 is a device used to forward the reference signal between the terrestrial base station and the terminal device 205.

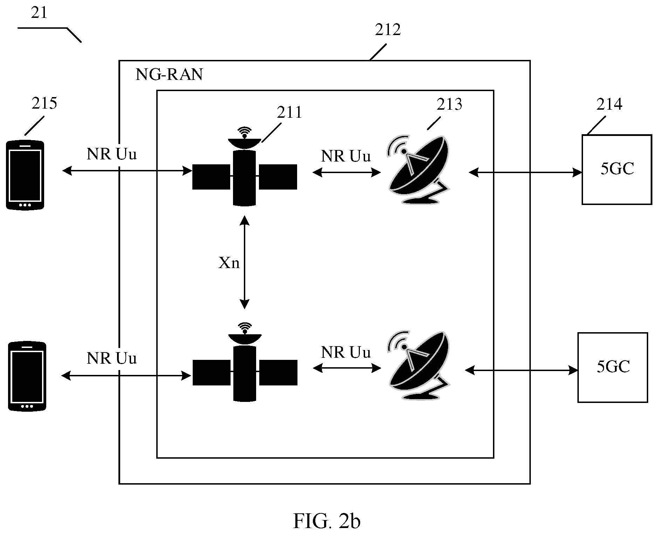

FIG. 2b is a diagram of an architecture in which an NTN has a regenerative architecture 21. The regenerative architecture includes an NG-RAN 212, a 5GC 214, and a terminal device 215. The NG-RAN 212 includes a satellite 211 and an NTN gateway (gateway) 213. The satellite 211 may be understood as a satellite-borne base station gNB, a service link may use an NR Uu interface, and a feeder link may use a satellite private air interface (satellite radio interface, SRI). Different satellite-borne base stations may communicate with each other through an Xn interface, and the satellite-borne base station and the terminal device 215 may communicate with each other through an NR Uu interface. A transmission type of the regenerative architecture 21 may be referred to as non-transparent transmission. The satellite 211 has some or all base station functions, and needs to support some or all transmission protocols. A transmission delay is a delay from the satellite 211 to the terminal device 215. If the regenerative architecture 21 is applied to a terminal device positioning scenario, the satellite 211 may directly send, to the terminal device 215, a reference signal used for positioning.

Due to a limitation on antenna deployment of a satellite and a terminal device, a positioning method based on a downlink time difference of arrival or round-trip time is mainly used. Specifically, existing satellite positioning methods mainly include the following two types:

A first type is a single-satellite-based positioning method, that is, one satellite is used as a positioning reference station for positioning. Specifically, methods such as Multi-RTT, TDOA (a plurality of moments of a single satellite), Doppler, and carrier phase positioning may be used. An advantage of this type of positioning method is that a satellite density requirement is low (theoretically, a single satellite is enough). However, because positioning depends on a single satellite, the positioning method faces problems of low precision and a high delay.

A second type is a multi-satellite-based positioning method, that is, a plurality of satellites (at least four satellites) are used as positioning reference stations for positioning. Specific methods include, for example, Multi-RTT, TDOA (a single moment of a plurality of satellites), and carrier phase positioning. Because a quantity of positioning reference stations is large, positioning precision of this type of positioning method is high. However, a plurality of satellites (at least four satellites) are required in a visible range of a terminal device. This type of method has a high satellite density requirement, and also imposes a requirement on inter-satellite interaction and coordination.

In a satellite positioning scenario, the terminal device needs to obtain corresponding positioning assistance data. However, in this scenario, a positioning reference station is a satellite (or an air base station), and a positioning reference signal may be different from an existing PRS, SRS, or the like.

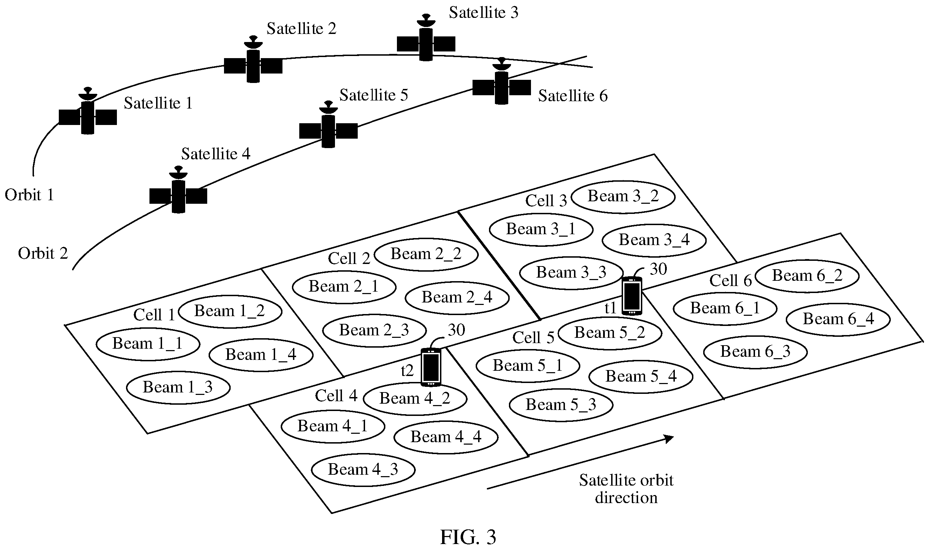

Currently, in a terrestrial cellular positioning scenario, a terrestrial base station is usually stationary. However, a satellite flight speed is high, and terrestrial cell coverage slides quickly. As a result, a PRS resource (PRS beam) to be measured by a terminal device changes frequently. FIG. 3 is a diagram of a PRS beam to be measured by a terminal device. It is assumed that a satellite 1, a satellite 2, and a satellite 3 exist on an orbit 1, a satellite 4, a satellite 5, and a satellite 6 exist on an orbit 2, and cells covered by the satellite 1 to the satellite 6 are sequentially a cell 1 to a cell 6. It is assumed that a beam p_q represents a beam q in a cell p. At a moment t1, a serving cell of a terminal device 30 is the cell 5, and to-be-measured beams of the terminal device 30 are a beam 5_2, a beam 2_4, a beam 3_3, a beam 3_4, and a beam 6_1. At a moment t2, because the satellite moves quickly, a serving cell of the terminal device 30 is the cell 4, and to-be-measured beams of the terminal device 30 are a beam 1_4, a beam 2_3, a beam 4_1, a beam 4_2, and a beam 5_1. If satellite positioning still uses an existing technology, a network device needs to update positioning assistance data in real time, and the terminal device 30 needs to frequently receive the positioning assistance data. Consequently, power consumption of the terminal device 30 is high. In addition, the terminal device 30 does not know specific satellites whose beams are currently aligned with the terminal device, and the terminal device 30 needs to measure PRSs in a plurality of beam directions from a serving satellite/neighboring satellite. This also causes a problem that power consumption and complexity of the terminal device 30 are high.

Therefore, embodiments of this application provide a communication method. The method may be applied to an IMT system, for example, applied to a terrestrial cellular positioning scenario or a terrestrial cellular communication scenario. The method may be further applied to a satellite system, for example, a satellite communication scenario in an NTN or a positioning scenario of satellite navigation. In the method, positioning assistance information sent by a network side indicates that reference signal configuration information of a network device of a current serving cell is associated with reference signal configuration information of a network device of a neighboring cell. In this way, the terminal device may receive a reference signal from a second network device based on second configuration information. In this way, the terminal device can clearly know reference signals of the second network device in specific directions that are to be received, or reference signals in specific beam directions that are to be received. Compared with a problem that the terminal device needs to perform blind measurement on a reference signal, that is, needs to measure reference signals of a plurality of network devices in a plurality of beam directions to obtain sufficient measurement quantities for positioning, causing high power consumption of the terminal device, in the implementation in which reception is performed in a beam direction indicated by associated configuration information and blind measurement does not need to be performed on reference signals of a plurality of network devices in a plurality of beam directions in this application, power consumption of the terminal device is low, and implementation complexity is low.

In addition, in the implementation in which the positioning assistance information indicates the associated configuration information in this application, when being within a cell coverage area of a first network device, the terminal device may receive a reference signal from the first network device based on first configuration information, and receive the reference signal from the second network device based on the second configuration information associated with the first configuration information. When being within a cell coverage area of the second network device, the terminal device may receive the reference signal from the second network device based on the second configuration information, and receive the reference signal from the first network device based on the first configuration information associated with the second configuration information. The positioning assistance information does not need to be frequently updated, and the terminal device does not need to frequently receive the positioning assistance data from the network device. Therefore, signaling overheads are low, and power consumption of the terminal device is low. Optionally, the network device may send positioning assistance information to the terminal device at intervals of a period of time, and does not need to send positioning assistance data each time when a beam that is associated with a positioning reference signal resource and that is to be measured by the terminal device changes, so that power consumption of the terminal device is low.

In embodiments of this application, the reference signal may be a reference signal used for positioning, for example, an uplink positioning reference signal SRS, a downlink positioning reference signal PRS, or a sidelink positioning reference signal (sidelink PRS), or may be another non-positioning-dedicated reference signal, for example, a synchronization signal block (synchronization signal block, SSB). A type of the reference signal is not limited in this application.

In embodiments of this application, an example in which the terminal device is in a radio resource control (radio resource control, RRC) connected mode is used for description. This application is also applicable to a case in which the terminal device is in a non-connected mode, for example, an RRC idle mode (RRC_idle) and an RRC inactive mode (RRC_inactive). When the terminal device is in the non-connected mode, in a possible implementation, the terminal device is paged back to the connected mode, and then embodiments of this application are performed. In another possible implementation, the terminal device may directly perform positioning measurement in the non-connected mode, and then perform positioning based on a measurement result.

The following describes embodiments of this application.

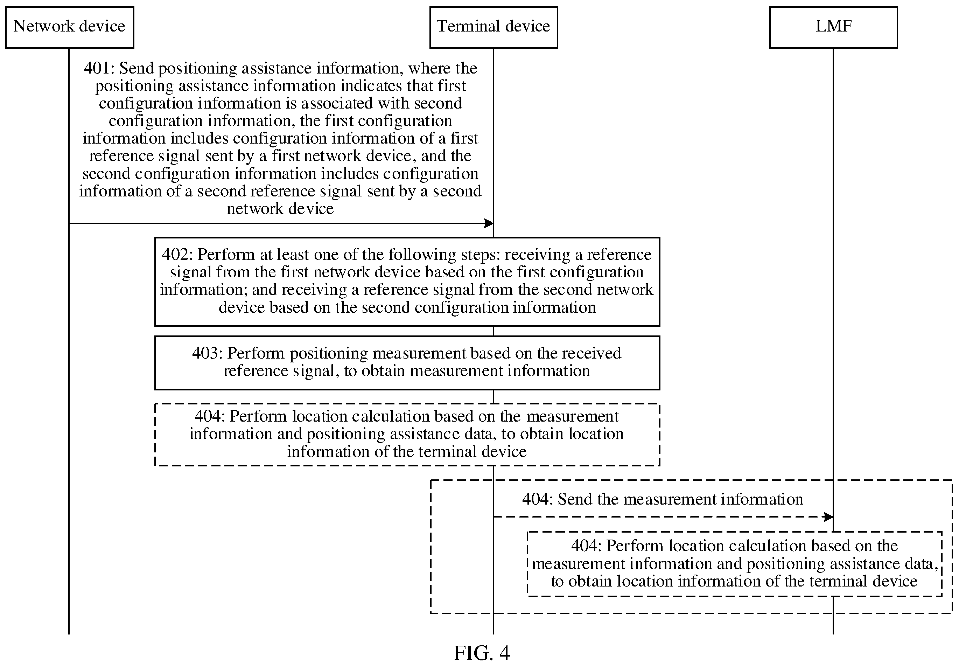

FIG. 4 is a schematic flowchart of a communication method according to an embodiment of this application. The method includes the following procedure.

401: A network device sends positioning assistance information to a terminal device, where the positioning assistance information indicates that first configuration information is associated with second configuration information. The first configuration information includes configuration information of a first reference signal sent by a first network device, and the second configuration information includes configuration information of a second reference signal sent by a second network device.

Correspondingly, the terminal device receives the positioning assistance information from the network device.

In some embodiments, the first network device is a serving network device of the terminal device or a network device corresponding to a serving cell, and the second network device is a network device corresponding to a neighboring cell of the serving cell. There may be one or more second network devices. When there are a plurality of second network devices, it is equivalent to that there are a plurality of neighboring cells of the serving cell of the terminal device.

In some embodiments, the network device that sends the positioning assistance information to the terminal device is the first network device. That the network device sends the positioning assistance information to the terminal device may include: The first network device sends the positioning assistance information to the terminal device. Correspondingly, the terminal device receives the positioning assistance information from the first network device.

In some embodiments, the first network device is a base station or a satellite, and the second network device may also be a base station or a satellite. Optionally, in a satellite system, a satellite that supports a regenerative architecture may also be referred to as a base station. This application is also applicable to a scenario in which a terrestrial base station and a satellite jointly perform positioning. To be specific, in the plurality of second network devices, some devices are terrestrial base stations, and some devices are satellites. In the following embodiments of this application, an example in which a base station and a satellite are collectively referred to as a base station is used for description. The first network device is a serving base station of the terminal device, and the second network device is a neighboring-cell base station of the serving base station.

For example, when the first network device is a base station 1, the second network device is a base station 2, and the terminal device is UE, the base station 1 sends positioning assistance information to the UE, where the positioning assistance information indicates that configuration information of a first reference signal sent by the base station 1 is associated with configuration information of a second reference signal sent by the base station 2. In a possible implementation, the base station 1 obtains the positioning assistance information from an LMF network element. For example, the base station 1 obtains the positioning assistance information from the LMF network element by using an NRPPa message (for example, assistance information control). In another possible implementation, the base station 1 obtains the positioning assistance information from the base station 2 or another base station. For example, the base station 1 obtains the positioning assistance information from the base station 2 or the another base station through an Xn interface.

In some embodiments, the first network device may send the positioning assistance information to a terminal device within a cell coverage area of the first network device. For example, the first network device may send the positioning assistance information by using existing broadcast information (for example, a posSIB (system information block, system information block) or another SIB). Alternatively, the first network device may send the positioning assistance information by using RRC information. Alternatively, the first network device may send the positioning assistance information by using new positioning broadcast information (which is independent of existing posSIB information).

In some embodiments, the LMF network element sends the positioning assistance information to the terminal device. For example, the LMF network element sends the positioning assistance information to the terminal device by using an LPP ProvideAssistanceData message. When the first network device is a serving base station of the terminal device, and the second network device is a neighboring-cell base station of the serving base station, the LMF network element may send the positioning assistance information to the terminal device through the first network device.

In some embodiments, both the first reference signal and the second reference signal are reference signals used for positioning.

402: The terminal device performs at least one of the following steps: receiving a reference signal from the first network device based on the first configuration information; or receiving a reference signal from the second network device based on the second configuration information.

In some embodiments, when receiving the positioning assistance information, the terminal device may receive reference signals from the first network device and the second network device based on the association between the first configuration information and the second configuration information indicated in the positioning assistance information. This is equivalent to that the terminal device receives the reference signal from the first network device based on the first configuration information, and receives the reference signal from the second network device based on the second configuration information associated with the first configuration information.

As described above, the first configuration information includes the configuration information of the first reference signal sent by the first network device, and the second configuration information includes the configuration information of the second reference signal sent by the second network device. The reference signal received by the terminal device from the first network device may be different from or the same as the first reference signal. The reference signal received by the terminal device from the second network device may be different from or the same as the second reference signal.

In some embodiments, the reference signal received by the terminal device from the first network device and the reference signal received by the terminal device from the second network device each are at least one of the following: a PRS or an SSB.

In some embodiments, the positioning assistance information indicates that PRS configuration information of the first network device is associated with PRS configuration information of the second network device. In some embodiments, the positioning assistance information indicates that PRS configuration information of the first network device is associated with SSB configuration information of the second network device.

For example, each reference signal is a PRS, that is, the terminal device receives a PRS from the first network device and receives a PRS from the second network device. For example, when a downlink positioning method is used, the base station 1 is a serving base station, and the base station 2 is a neighboring-cell base station, in a possible implementation, the positioning assistance information indicates that the PRS configuration information of the first network device is associated with the PRS configuration information of the second network device. The UE may receive a PRS from the base station 1 based on the first configuration information (that is, the PRS configuration information of the base station 1). Based on indication information of the association between the PRS configuration information of the first network device and the PRS configuration information of the second network device, the UE may receive a PRS from the base station 2 based on the second configuration information (that is, the PRS configuration information of the base station 2). In another possible implementation, the positioning assistance information indicates that the PRS configuration information of the first network device is associated with the SSB configuration information of the second network device. The UE may receive a PRS from the base station 1 based on the first configuration information (that is, the PRS configuration information of the base station 1). Based on indication information of the association between the PRS configuration information of the first network device and the SSB configuration information of the second network device, the UE may receive a PRS from the base station 2 based on the second configuration information (that is, the SSB configuration information of the base station 2). In this way, the UE can clearly know specific PRSs of the base station 2 that are to be received, or PRSs in specific beam directions that are to be received. The UE performs positioning measurement based on the PRS obtained from the base station 1 and the PRS obtained from the base station 2.

Alternatively, each reference signal is an SSB, that is, the terminal device receives an SSB from the first network device and receives an SSB from the second network device. For example, when a downlink positioning method is used, the base station 1 is a serving base station, and the base station 2 is a neighboring-cell base station, in a possible implementation, the positioning assistance information indicates that the PRS configuration information of the first network device is associated with the SSB configuration information of the second network device. The UE may receive an SSB from the base station 1 based on the first configuration information (that is, the PRS configuration information of the base station 1). Based on indication information of the association between the PRS configuration information of the first network device and the SSB configuration information of the second network device, the UE may receive an SSB from the base station 2 based on the second configuration information (that is, the SSB configuration information of the base station 2). In another possible implementation, the positioning assistance information indicates that the PRS configuration information of the first network device is associated with the PRS configuration information of the second network device. The UE may receive an SSB from the base station 1 based on the first configuration information (that is, the PRS configuration information of the base station 1). Based on indication information of the association between the PRS configuration information of the first network device and the PRS configuration information of the second network device, the UE may receive an SSB from the base station 2 based on the second configuration information (that is, the PRS configuration information of the base station 2). In this way, the UE can clearly know specific SSBs of the base station 2 that are to be received, or SSBs in specific beam directions that are to be received. The UE performs positioning measurement based on the SSB obtained from the base station 1 and the SSB obtained from the base station 2.

In some embodiments, the positioning assistance information indicates that SSB configuration information of the first network device is associated with PRS configuration information or SSB configuration information of the second network device.

For example, each reference signal is an SSB, that is, the terminal device receives an SSB from the first network device and receives an SSB from the second network device. For example, when a downlink positioning method is used, the base station 1 is a serving base station, and the base station 2 is a neighboring-cell base station, in a possible implementation, the positioning assistance information indicates that the SSB configuration information of the first network device is associated with the SSB configuration information of the second network device. The UE may receive an SSB from the base station 1 based on the first configuration information (that is, the SSB configuration information of the base station 1). Based on indication information of the association between the SSB configuration information of the first network device and the SSB configuration information of the second network device, the UE may receive an SSB from the base station 2 based on the second configuration information (that is, the SSB configuration information of the base station 2). In another possible implementation, the positioning assistance information indicates that the SSB configuration information of the first network device is associated with the PRS configuration information of the second network device. The UE may receive an SSB from the base station 1 based on the first configuration information (that is, the SSB configuration information of the base station 1). Based on indication information of the association between the SSB configuration information of the first network device and the PRS configuration information of the second network device, the UE may receive an SSB from the base station 2 based on the second configuration information (that is, the PRS configuration information of the base station 2). In this way, the UE can clearly know specific SSBs of the base station 2 that are to be received, or SSBs in specific beam directions that are to be received. The UE performs positioning measurement based on the SSB obtained from the base station 1 and the SSB obtained from the base station 2.

Alternatively, each reference signal is a PRS, that is, the terminal device receives a PRS from the first network device and receives a PRS from the second network device. For example, when a downlink positioning method is used, the base station 1 is a serving base station, and the base station 2 is a neighboring-cell base station, in a possible implementation, the positioning assistance information indicates that the SSB configuration information of the first network device is associated with the PRS configuration information of the second network device. The UE may receive a PRS from the base station 1 based on the first configuration information (that is, the PRS configuration information of the base station 1). Based on indication information of the association between the SSB configuration information of the first network device and the PRS configuration information of the second network device, the UE may receive a PRS from the base station 2 based on the second configuration information (that is, the PRS configuration information of the base station 2). In another possible implementation, the positioning assistance information indicates that the SSB configuration information of the first network device is associated with the SSB configuration information of the second network device. The UE may receive a PRS from the base station 1 based on the first configuration information (that is, the SSB configuration information of the base station 1). Based on indication information of the association between the SSB configuration information of the first network device and the SSB configuration information of the second network device, the UE may receive a PRS from the base station 2 based on the second configuration information (that is, the SSB configuration information of the base station 2). In this way, the UE can clearly know specific PRSs of the base station 2 that are to be received, or PRSs in specific beam directions that are to be received. The UE performs positioning measurement based on the PRS obtained from the base station 1 and the PRS obtained from the base station 2.

In some embodiments, the positioning assistance information indicates that PRS configuration information of the first network device is associated with PRS configuration information or SSB configuration information of the second network device. The UE receives a PRS from the first network device and an SSB from the second network device; or the UE receives an SSB from the first network device and a PRS from the second network device.

In some other embodiments, the positioning assistance information indicates that SSB configuration information of the first network device is associated with PRS configuration information or SSB configuration information of the second network device. The UE receives a PRS from the first network device and an SSB from the second network device; or the UE receives an SSB from the first network device and a PRS from the second network device.

It should be noted that, in the foregoing embodiment, there may be a plurality of second network devices. In the example herein, there may be a plurality of base stations 2. It is equivalent to that for the UE, the UE performs positioning measurement based on a reference signal received from the base station 1 serving as a serving base station and a plurality of reference signals received from the plurality of base stations 2.

In this way, if the UE moves at a high speed, a serving cell of the UE may change frequently, and the UE may need to frequently receive reference signal configuration information from different serving cells, to update positioning assistance data. When the positioning assistance information in this application is applied, and a network side such as the serving base station/LMF network element indicates, to the UE, configuration information that is of a reference signal sent by a neighboring-cell base station and that is associated with configuration information of the reference signal sent by the serving base station, optionally, validity of the positioning assistance information is indicated, for example, expiry time (ExpiryTime) of the positioning assistance information is indicated, or whether the positioning assistance information is valid (valueTag) is indicated, so that the UE can update the positioning assistance information when the positioning assistance information becomes invalid or is to become invalid, thereby effectively reducing reception power consumption and measurement power consumption of the UE. In some cases, even if the serving cell of the UE changes, if positioning assistance information on a UE side includes reference signal configuration information of a changed serving cell, the UE may measure an associated reference signal in the positioning assistance information, without attempting to receive reference signals in all directions, thereby effectively reducing reception power consumption and measurement power consumption of the UE.

In some embodiments, for application to a satellite system, for example, application to a satellite navigation and positioning system, the terrestrial base station may be replaced with a satellite (or an air base station), and a reference signal used for positioning may be different from a reference signal in an IMT system.

In a satellite positioning scenario, because a satellite moves at a high speed, a serving satellite/serving cell of the UE may change frequently. According to the conventional technology, the UE needs to frequently receive reference signal configuration information from different serving satellites, to update positioning assistance data. When the positioning assistance information in this application is applied, and the serving satellite/LMT indicates, to the UE, reference signal configuration information of a neighboring satellite associated with reference signal configuration information of the serving satellite, optionally, similar to the implementation in the IMT system, validity of the positioning assistance information is indicated, for example, expiry time of the positioning assistance information is indicated, or whether the positioning assistance information is valid is indicated, so that the UE can update the positioning assistance information when the positioning assistance information becomes invalid or is to become invalid, thereby effectively reducing reception power consumption and measurement power consumption of the UE. In some cases, even if the serving cell of the UE in the satellite system changes, if positioning assistance information on a UE side includes reference signal configuration information of a changed serving cell, the UE may measure an associated reference signal of a satellite in the positioning assistance information, without attempting to receive reference signals in all directions, thereby effectively reducing reception power consumption and measurement power consumption of the UE.

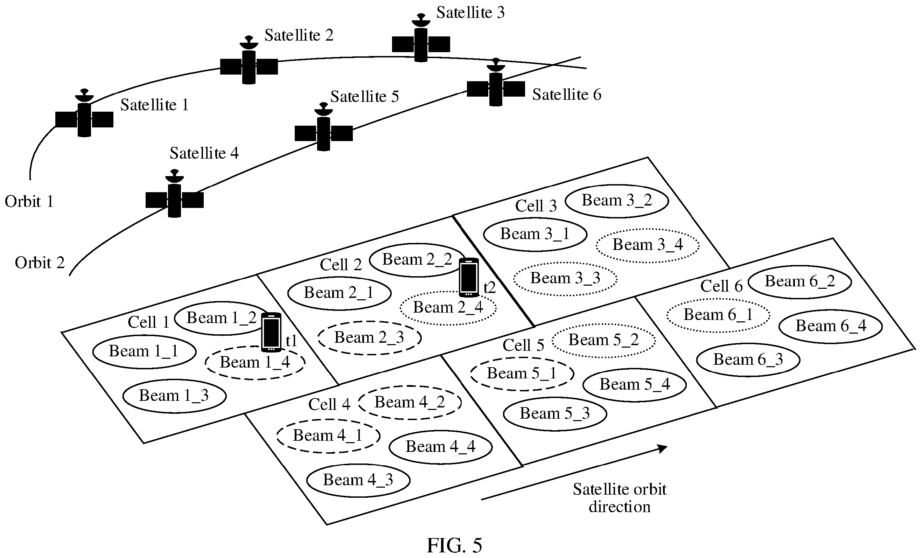

Example descriptions are provided herein with reference to the figures. FIG. 5 is a diagram of a beam association. It is assumed that an orbit direction of a satellite is a direction shown in FIG. 5, and cells sequentially corresponding to a satellite 1 to a satellite 6 are a cell 1 to a cell 6. A serving cell of the UE at a moment t1 is the cell 1, the cell 1 is a cell covered by the satellite 1, and the satellite 1 is a serving satellite of the UE. In other words, the first network device may be understood as the satellite 1 herein. A beam p_q represents a beam q in a cell p. The satellite 1 may send positioning assistance information to UE within a coverage area of the cell 1. The configuration information that is of the first reference signal and that is indicated by the positioning assistance information includes information about a beam 1_4 sent by the satellite 1. When there are a plurality of second network devices, that is, there are a plurality of second reference signals, beams of the plurality of second reference signals include beams of a plurality of neighboring satellites. For example, the plurality of neighboring satellites include the satellite 2, the satellite 4, and the satellite 5, and the beams sent by the plurality of neighboring satellites include a beam 2_3 of the satellite 2, a beam 4_1 and a beam 4_2 of the satellite 4, and a beam 5_1 of the satellite 5. The configuration information of the second reference signal includes information about any one of the beam 2_3, the beam 4_1, the beam 4_2, and the beam 5_1 that are sent by the satellite 2, the satellite 4, and the satellite 5. In this way, that the positioning assistance information indicates that the configuration information of the first reference signal sent by the first network device is associated with the configuration information of the second reference signal sent by the second network device may be understood as indicating that the information about the beam 1_4 sent by the satellite 1 is associated with information about the beam 2_3 sent by the satellite 2, the beam 4_1 and the beam 4_2 sent by the satellite 4, and the beam 5_1 sent by the satellite 5. At the moment t1, the UE is located in a direction of the beam 1_4 of the serving cell (the cell 1), and may receive a reference signal in the direction of the beam 1_4 based on the configuration information of the first reference signal, receive reference signals in directions of the beam 2_3, the beam 4_1, the beam 4_2, and the beam 5_1 based on the foregoing association relationship, and perform positioning measurement based on the reference signals in the five associated beam directions.

In some embodiments, the network device may update the positioning assistance information based on an orbit status of the satellite, for example, may indicate validity of the positioning assistance information. As shown in FIG. 5, it is assumed that when the UE moves to a range of the cell 2 at a next moment t2, compared with that at the moment t1, the positioning assistance information sent by the network device may become invalid. In this case, the positioning assistance information indicates that information about a beam 2_4 sent by the satellite 2 is associated with information about a beam 3_3 and a beam 3_4 that are sent by the satellite 3, information about a beam 5_2 sent by the satellite 5, and information about a beam 6_1 sent by the satellite 6. At the moment t2, the UE is located in a direction of the beam 2_4 of the serving cell (the cell 2), and may receive a reference signal in the direction of the beam 2_4 based on the configuration information of the first reference signal, receive reference signals in directions of the beam 3_3, the beam 3_4, the beam 5_2, and the beam 6_1 based on the foregoing association relationship, and perform positioning measurement based on the reference signals in the five associated beam directions.

In this way, in comparison with a problem that power consumption and complexity of the UE are high because the base station needs to update positioning assistance data in real time, the UE needs to frequently receive the positioning assistance data to perform positioning measurement, and the UE needs to measure reference signals in beam directions of a plurality of base stations to perform positioning measurement, in this application, receiving a reference signal based on configuration information of an associated reference signal or associated beam information indicated by the positioning assistance information can effectively reduce reception power consumption and measurement power consumption of the UE, and also reduce positioning complexity of the UE.

In some embodiments, the positioning assistance information in this application includes the first configuration information and the second configuration information.

In some embodiments, the first configuration information includes at least one of the following: resource information of the first reference signal; resource set information of the first reference signal; information about the first network device; frequency information of the first reference signal; a cell identifier corresponding to the first network device; or an index of the first reference signal.

In some embodiments, for example, for application in a downlink positioning scenario:
The resource information of the first reference signal includes at least one of the following: a resource identifier of the first reference signal; beam information of the first reference signal; or angle information of the first reference signal.

For example, when the resource information of the first reference signal includes the resource identifier of the first reference signal, the resource identifier of the first reference signal is, for example, a PRS resource identifier, that is, a PRS resource ID. Optionally, one PRS resource ID corresponds to one beam ID. When the first reference signal is a downlink reference signal, a first PRS resource identifier is, for example, the DL-PRS resource ID shown in Table 1. When the resource information of the first reference signal is the beam information of the first reference signal, the beam information of the first reference signal is, for example, a beam ID of a PRS. When the resource information of the first reference signal is the angle information of the first reference signal, the angle information of the first reference signal is, for example, at least one of an angle of departure (angle of departure, AOD) or an angle of arrival (angle of arrival, AOA) of a PRS.

The resource set information of the first reference signal is a PRS resource set identifier, that is, the foregoing PRS resource set ID. Optionally, one PRS resource set ID corresponds to at least one PRS resource ID. When the first reference signal is a downlink reference signal, a first PRS resource set identifier is, for example, the DL-PRS resource set ID shown in Table 1.

The information about the first network device is an identifier of a first base station or an identifier of a first TRP identifier. Optionally, one TRP ID corresponds to at least one DL-PRS resource set ID. When the first reference signal is a downlink reference signal, the information about the first network device is, for example, the DL-PRS ID shown in Table 1.

The frequency information of the first reference signal is a PFL identifier/frequency identifier, that is, a PFL ID. Optionally, one PFL ID corresponds to at least one TRP ID.

The cell identifier corresponding to the first network device is a cell ID. Optionally, one cell ID corresponds to at least one SSB index.

The index of the first reference signal is identification information of the first reference signal, for example, index.

Similar to the first configuration information, the second configuration information includes at least one of the following: resource information of the second reference signal; resource set information of the second reference signal; information about the second network device; frequency information of the second reference signal; a cell identifier corresponding to the second network device; or an index of the second reference signal. For specific descriptions of the second configuration information, refer to the foregoing descriptions of the first configuration information.

Similar to the resource information of the first reference signal, the resource information of the second reference signal includes at least one of the following: a resource identifier of the second reference signal; beam information of the second reference signal; or angle information of the second reference signal. For specific descriptions of the resource information of the second reference signal, refer to the foregoing descriptions of the resource information of the first reference signal.

For example, the positioning assistance information may indicate that the resource identifier of the first reference signal of the first network device is associated with the resource identifier of the second reference signal of the second network device. This may be understood as that the positioning assistance information indicates that at least one PRS resource of the first network device is associated with at least one PRS resource of the second network device. Optionally, the PRS resource of the second network device may be indicated by using one or more of a PFL ID, a TRP ID, a PRS resource set ID, and a PRS resource ID. For example, the PRS resource of the second network device may be indicated by using the PFL ID, the TRP ID, the PRS resource set ID, and the PRS resource ID, that is, some TRP IDs corresponding to the PFL ID, some PRS resource set IDs corresponding to the TRP ID, some PRS resource IDs corresponding to the PRS resource set ID, and the directly indicated PRS resource ID are associated with a PRS resource ID of the first network device, and the positioning assistance information includes at least one PRS resource ID of the first network device, and at least one PFL ID, at least one TRP ID, at least one PRS resource set ID, and at least one PRS resource ID of the second network device. Alternatively, the PRS resource of the second network device may be indicated by using the TRP ID, the PRS resource set ID, and the PRS resource ID, that is, some PRS resource set IDs corresponding to the TRP ID of the second network device, some PRS resource IDs corresponding to the PRS resource set ID, and the directly indicated PRS resource ID are associated with a PRS resource ID of the first network device, and the positioning assistance information includes at least one PRS resource ID of the first network device, and at least one TRP ID, at least one PRS resource set ID, and at least one PRS resource ID of the second network device. Alternatively, the PRS resource of the second network device may be indicated by using the PRS resource set ID and the PRS resource ID, that is, the PRS resource ID corresponding to the PRS resource set ID of the second network device and the directly indicated PRS resource ID are associated with a PRS resource ID of the first network device, and the positioning assistance information includes at least one PRS resource ID of the first network device, and at least one PRS resource set ID and at least one PRS resource ID of the second network device. In this way, the terminal device receives the reference signal from the first network device based on the at least one PRS resource ID of the first network device, and receives the reference signal from the second network device based on the at least one PRS resource ID of the second network device and indication information of an association between the at least one PRS resource ID of the first network device and the at least one PRS resource ID of the second network device, to reduce reception power consumption and measurement power consumption of the terminal device.

Alternatively, the positioning assistance information indicates that the resource identifier of the first reference signal of the first network device is associated with the resource set information of the second reference signal of the second network device. This may be understood as that the positioning assistance information indicates that at least one PRS resource of the first network device is associated with at least one PRS resource set of the second network device. Optionally, the PRS resource of the second network device may be indicated by using one or more of a PFL ID, a TRP ID, and a PRS resource set ID. For example, the PRS resource set of the second network device may be indicated by using the PFL ID, the TRP ID, and the PRS resource set ID, that is, some TRP IDs corresponding to the PFL ID, some PRS resource set IDs corresponding to the TRP ID, and the directly indicated PRS resource set ID are associated with a PRS resource ID of the first network device, and the positioning assistance information includes at least one PRS resource ID of the first network device, and at least one PFL ID, at least one TRP ID, and at least one PRS resource set ID of the second network device. Alternatively, the PRS resource set of the second network device may be indicated by using the TRP ID and the PRS resource set ID, that is, some PRS resource set IDs corresponding to the TRP ID and the directly indicated PRS resource set ID are associated with a PRS resource ID of the first network device, and the positioning assistance information includes at least one PRS resource ID of the first network device, and at least one TRP ID and at least one PRS resource set ID of the second network device. Alternatively, the PRS resource set of the second network device may be indicated by using the PRS resource set ID, that is, the PRS resource set ID directly indicated by the positioning assistance information is associated with a PRS resource ID of the first network device, and the positioning assistance information includes at least one PRS resource ID of the first network device and at least one PRS resource set ID of the second network device. In this way, the terminal device receives the reference signal from the first network device based on the at least one PRS resource ID of the first network device, and receives the reference signal from the second network device based on the at least one PRS resource set ID of the second network device and indication information of an association between the at least one PRS resource ID of the first network device and the at least one PRS resource set ID of the second network device, to reduce reception power consumption and measurement power consumption of the terminal device.

Alternatively, the positioning assistance information indicates that the resource identifier of the first reference signal of the first network device is associated with the information about the second network device. This may be understood as that the positioning assistance information indicates that at least one PRS resource of the first network device is associated with at least one TRP of the second network device. Optionally, the information about the second network device may be indicated by using one or more of a PFL ID and a TRP ID. For example, the TRP of the second network device may be indicated by using the PFL ID and the TRP ID, that is, some TRP IDs included in the PFL ID and the directly indicated TRP ID are associated with a PRS resource ID of the first network device, where a TRP ID corresponding to the TRP ID included in the positioning assistance information, a PRS resource set ID corresponding to the TRP ID, a PRS resource ID corresponding to each PRS resource set ID, and the directly indicated TRP ID are associated with the PRS resource ID of the first network device, and the positioning assistance information includes at least one PRS resource ID of the first network device, and at least one PFL ID and at least one TRP ID of the second network device. Alternatively, the TRP of the second network device may be directly indicated by using the TRP ID, that is, the positioning assistance information includes at least one PRS resource ID of the first network device and at least one TRP ID of the second network device. In this way, the terminal device receives the reference signal from the first network device based on the at least one PRS resource ID of the first network device, and receives the reference signal from the second network device based on the at least one TRP ID of the second network device and indication information of an association between the at least one PRS resource ID of the first network device and the at least one TRP ID of the second network device, to reduce reception power consumption and measurement power consumption of the terminal device.

Alternatively, the positioning assistance information indicates that the resource identifier of the first reference signal of the first network device is associated with the frequency information of the second reference signal. This may be understood as that the positioning assistance information indicates that at least one PRS resource of the first network device is associated with at least one PFL of the second reference signal. Optionally, the frequency information of the second reference signal is indicated by using a PFL ID. This means that a TRP ID corresponding to the PFL ID, a PRS resource set ID corresponding to the TRP ID, and a PRS resource ID corresponding to the PRS resource set ID are associated with a PRS resource ID of the first network device. The positioning assistance information includes at least one PRS resource ID of the first network device and at least one PFL ID of the second reference signal. In this way, the terminal device receives the reference signal from the first network device based on the at least one PRS resource ID of the first network device, and receives the reference signal from the second network device based on the at least one PFL ID of the second network device and indication information of an association between the at least one PRS resource ID of the first network device and the at least one PFL ID of the second network device, to reduce reception power consumption and measurement power consumption of the terminal device.

Certainly, the first configuration information may also be implemented like the foregoing example of the second configuration information. For example, the positioning assistance information indicates that the resource set identifier of the first reference signal of the first network device is associated with the resource identifier of the first reference signal of the second network device. This may be understood as that the positioning assistance information indicates that a PRS resource set of the first network device is associated with a PRS resource of the second network device. For example, the PRS resource set of the first network device may be indicated by using a PFL ID, a TRP ID, and a PRS resource set ID, or may be indicated by using a TRP ID and a PRS resource set ID, or may be directly indicated by using a PRS resource set ID. The PRS resource of the second network device may be indicated by using a PFL ID, a TRP ID, a PRS resource set ID, and a PRS resource ID, or may be indicated by using a TRP ID, a PRS resource set ID, and a PRS resource ID, or may be indicated by using a PRS resource set ID and a PRS resource ID, or may be directly indicated by using a PRS resource ID. In this way, the terminal device receives the reference signal from the first network device based on the at least one PRS resource set ID of the first network device, and receives the reference signal from the second network device based on the at least one PRS resource ID of the second network device and indication information of an association between the at least one PRS resource set ID of the first network device and the at least one PRS resource ID of the second network device, to reduce reception power consumption and measurement power consumption of the terminal device.

Alternatively, the positioning assistance information indicates that the resource identifier of the first reference signal of the first network device is associated with the cell identifier of the second network device. This may be understood as that the positioning assistance information indicates that at least one PRS resource of the first network device is associated with at least one cell of the second network device. The cell of the second network device may be indicated by using a cell ID. This means that an SSB index included in the cell ID is associated with a PRS resource ID of the first network device. For example, the resource identifier of the first reference signal of the first network device may be indicated by using a PFL ID, a TRP ID, a PRS resource set ID, and a PRS resource ID, or may be indicated by using a TRP ID, a PRS resource set ID, and a PRS resource ID, or may be indicated by using a PRS resource set ID and a PRS resource ID, or may be directly indicated by using a PRS resource ID. The cell identifier of the second network device may be indicated by using a cell ID. In this way, the terminal device receives the reference signal from the first network device based on the at least one PRS resource ID of the first network device, and receives the reference signal from the second network device based on the at least one cell ID of the second network device and indication information of an association between the at least one PRS resource ID of the first network device and the at least one cell ID of the second network device, to reduce reception power consumption and measurement power consumption of the terminal device.

Alternatively, the positioning assistance information indicates that the resource identifier of the first reference signal of the first network device is associated with the index of the second reference signal. This may be understood as that the positioning assistance information indicates that at least one PRS resource of the first network device is associated with at least one SSB of the second reference signal. For example, the resource identifier of the first reference signal of the first network device may be indicated by using a PFL ID, a TRP ID, a PRS resource set ID, and a PRS resource ID, or may be indicated by using a TRP ID, a PRS resource set ID, and a PRS resource ID, or may be indicated by using a PRS resource set ID and a PRS resource ID, or may be directly indicated by using a PRS resource ID. The SSB of the second reference signal may be indicated by using a cell ID and an SSB index, or may be directly indicated by using an SSB index. When the SSB of the second reference signal is indicated by using the cell ID and the SSB index, some SSB indexes included in the cell ID and the directly indicated SSB index are associated with a PRS resource ID of the first network device. In this way, the terminal device receives the reference signal from the first network device based on the at least one PRS resource ID of the first network device, and receives the second reference signal based on the at least one SSB index of the second reference signal and indication information of an association between the at least one PRS resource ID of the first network device and the at least one SSB index of the second reference signal, to reduce reception power consumption and measurement power consumption of the terminal device.

In this way, for the terminal device, the terminal device receives, based on the association relationship indicated by the currently received positioning assistance information, a PRS or an SSB to perform positioning measurement. A range of a reference signal used by the terminal device for positioning measurement is small, and both reception power consumption and measurement power consumption of the terminal device are low.

In some embodiments, in this application, an information set may also be defined to implement the positioning assistance information, and the information set includes the first configuration information and the second configuration information.

For example, the information set includes at least one PRS resource ID of the first network device and at least one PRS resource ID of the second network device. The PRS resource ID of the first network device and the PRS resource ID of the second network device may be indicated by using a PFL ID, a TRP ID, a PRS resource set ID, and a PRS resource ID, or may be indicated by using a TRP ID, a PRS resource set ID, and a PRS resource ID, or may be indicated by using a PRS resource set ID and a PRS resource ID, or may be indicated by using a PRS resource ID.

Alternatively, the information set includes at least one PRS resource ID of the first network device and at least one PRS resource set ID of the second network device. The at least one PRS resource set ID of the second network device may be indicated by using a PFL ID, a TRP ID, and a PRS resource set ID, or may be indicated by using a TRP ID and a PRS resource set ID, or may be indicated by using a PRS resource set ID.

Alternatively, the information set includes at least one PRS resource set ID of the first network device and at least one PRS resource ID of the second network device. The at least one PRS resource set ID of the first network device may be indicated by using a PFL ID, a TRP ID, and a PRS resource set ID, or may be indicated by using a TRP ID and a PRS resource set ID, or may be indicated by using a PRS resource set ID.

Alternatively, the information set includes at least one PRS resource set ID of the first network device and at least one PRS resource set ID of the second network device. The at least one PRS resource set ID of the first network device and the at least one PRS resource set ID of the second network device may be indicated by using a PFL ID, a TRP ID, and a PRS resource set ID, or may be indicated by using a TRP ID and a PRS resource set ID, or may be indicated by using a PRS resource set ID.

Alternatively, the information set includes that at least one of a PRS resource ID or a PRS resource set ID of the first network device is associated with at least one of a cell ID of the second network device or an SSB index of the second reference signal.

In this way, for the terminal device, the terminal device receives, based on the information in the information set indicated by the currently received positioning assistance information, a PRS or an SSB to perform positioning measurement. A range of a reference signal used by the terminal device for positioning measurement is small, and both reception power consumption and measurement power consumption of the terminal device are low. In some scenarios, for the terminal device, if current time is still in a validity time range of the positioning assistance information, and the terminal device is in another cell range associated with the information in the information set, the terminal device receives a reference signal corresponding to the information in the information set, a range of a reference signal to be measured by the terminal device remains unchanged, the terminal device does not need to receive new assistance data, and both reception power consumption and measurement power consumption of the terminal device are low.

In some embodiments, when the first network device may send the positioning assistance information to the terminal device within the cell coverage area of the first network device by using a broadcast message, a serving base station of the terminal device may broadcast the positioning assistance information to UE within a cell coverage area of the serving base station. The broadcast message may be a posSIB newly defined in this application, and the posSIB includes the positioning assistance information. Correspondingly, the terminal device receives the posSIB sent by the first network device.

In this way, in this application, validity of the posSIB may be indicated, for example, expiry time of the posSIB is indicated, or whether the posSIB is valid is indicated, and the UE may update the posSIB when the posSIB becomes invalid or is to become invalid. In a validity time range of the posSIB, the terminal device may receive a reference signal based on an association relationship indicated by the posSIB, to avoid a problem that when positioning assistance data is carried in the posSIB, the positioning assistance data in the posSIB needs to be frequently updated, causing high reception power consumption and large storage space.

For application to a satellite system, a satellite moves at a high speed, but the LMF network element can obtain, in real time, an orbit direction and a location of each satellite associated with the LMF network element, and know a beam direction of the associated satellite. In a possible implementation, the LMF network element sends the positioning assistance information to the serving satellite, and the serving satellite sends the posSIB to a terminal device within a coverage area of the serving satellite. When the posSIB includes the positioning assistance information, in a validity time range of the posSIB, the terminal device may receive, based on the positioning assistance information in the posSIB received from the serving satellite, positioning reference signals of a plurality of satellites. This can also reduce reception power consumption of the terminal device, and reduce a storage space requirement of the terminal device. A transmission format of the posSIB in the satellite system may be different from a transmission format of a posSIB in the IMT system.

In some embodiments, when the LMF network element sends the positioning assistance information to the terminal device by using a unicast message, the unicast message may be an LTE positioning protocol (LTE positioning protocol, LPP) message, that is, the LPP message includes the positioning assistance information. Correspondingly, the terminal device receives the LPP message sent by the LMF network element.

For example, the LMF network element may first send an NRPPa message to the serving base station (the first network device) of the terminal device, where the NRPPa message includes second positioning assistance information. The serving base station may send first positioning assistance information to the UE based on the second positioning assistance information. For example, the first positioning assistance information is carried in an RRC message or a MAC control element (MAC control element, MAC CE). The first positioning assistance information and the second positioning assistance information may be the same, or may be different.

In some embodiments, based on the positioning assistance information, the terminal device may perform positioning measurement based on the positioning assistance information. Therefore, after step 402, as shown in FIG. 4, the method may further include the following procedure.

403: The terminal device performs positioning measurement based on the received reference signal, to obtain measurement information.

In some embodiments, the terminal device may perform positioning measurement based on the reference signal received from the first network device based on the first configuration information and the reference signal received from the second network device based on the second configuration information, to obtain the measurement information/a measurement quantity.

For example, the configuration information of the first reference signal indicates a PRS resource of the first network device, and the configuration information of the second reference signal indicates a PRS resource of the second network device. The terminal device receives a PRS from the first network device on the PRS resource of the first network device, and receives a PRS from the second network device on the PRS resource of the second network device. The terminal device performs positioning measurement based on the PRS from the first network device and the PRS from the second network device.

Alternatively, the configuration information of the first reference signal indicates a PRS resource of the first network device, and the configuration information of the second reference signal indicates an SSB of the second network device. The terminal device receives a PRS from the first network device on the PRS resource of the first network device, and receives an SSB from the second network device on a PRS resource of the second network device. The terminal device performs positioning measurement based on the PRS from the first network device and the SSB from the second network device.

Herein, there are a plurality of second network devices, or there are a plurality of second reference signals. In other words, the terminal device may perform positioning measurement based on the PRS from the first network device and PRSs/SSBs from the plurality of second network devices.

404: The terminal device performs location calculation based on the measurement information and the positioning assistance information, to obtain location information of the terminal device.

For example, if UE-based positioning is used, the measurement information is used by the UE to locally calculate a location of the UE.

Alternatively, step 404 may be replaced with the following: The terminal device sends the measurement information to the network device, and the network device performs location calculation based on the measurement information and the positioning assistance information, to obtain location information of the terminal device.

For example, if UE-assisted/LMF-based positioning is used, the UE may send the measurement information to the LMF network element, and the LMF network element calculates a location of the UE; or the UE first sends the measurement information to the serving base station, then the serving base station sends the measurement information to the LMF network element, and the LM network element F calculates a location of the UE.

For another non-positioning scenario, for example, a data communication scenario, the measurement information may be used for power control, beam management, or another communication purpose.

The positioning assistance data herein may be existing positioning assistance data, for example, include a location and timing information of a base station, and is different from the positioning assistance information in this application.

In some embodiments, if step 403 and step 404 are applied to a satellite navigation or positioning scenario, the terminal device may calculate the location information of the terminal device based on a received reference signal, and orientations, orbit trajectories, ephemeris information, and the like of the serving satellite and a neighboring satellite that are received from the serving satellite/LMF network element.

Therefore, in this application, the network indicates an association relationship between configuration information of a reference signal of the serving base station/satellite and configuration information of a reference signal of the neighboring-cell base station/satellite, so that the terminal device can receive the reference signals of the serving base station/satellite and the neighboring-cell base station/satellite based on the association relationship. This can effectively reduce reception power consumption and measurement power consumption on a terminal device side, reduce signaling overheads, and ensure positioning performance.

In addition, in a scenario of a satellite system, a satellite moves at a high speed, beam service time of the satellite is short, the UE may not receive sufficient reference signals within short time, a positioning requirement cannot be met, and positioning performance cannot be ensured. For example, a typical single-beam coverage radius is 40 kilometers (km), and service time is about 10s. Therefore, in this application, the direction information of the UE may be sent by the UE or the base station, so that the network device determines configuration information of a positioning reference signal. For example, the network device may determine configuration information of a positioning reference signal whose beam direction is aligned with an area in which the UE is located. In this way, the UE can receive sufficient positioning reference signals within short time, thereby improving positioning performance.

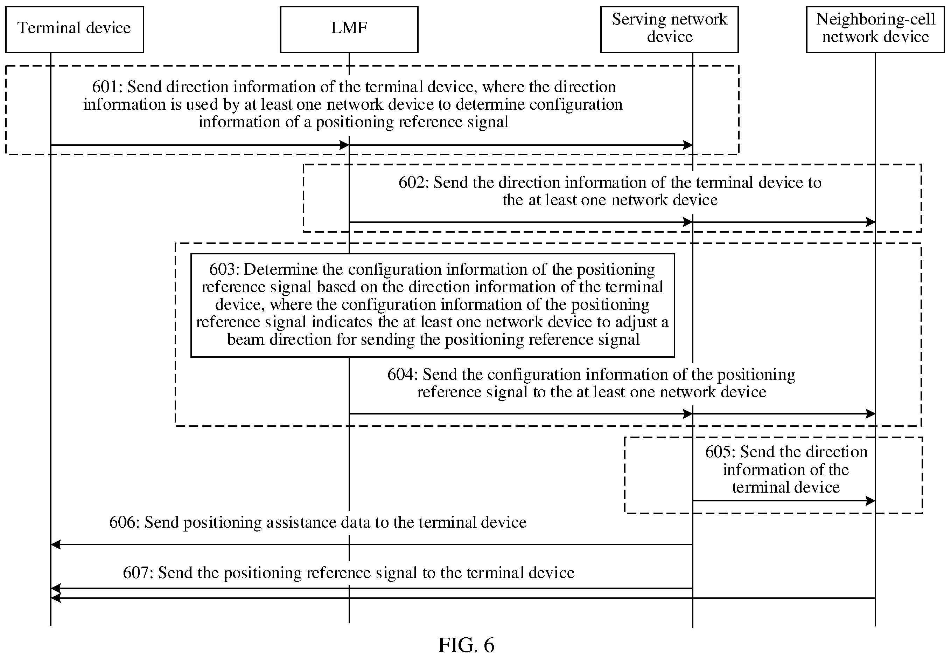

FIG. 6 is a schematic flowchart of a communication method according to an embodiment of this application. The method includes the following procedure.

601: A terminal device sends direction information of the terminal device, where the direction information is used by at least one network device to determine configuration information of a positioning reference signal. Then, step 602, step 603, or step 605 is performed.

In some embodiments, the terminal device sends the direction information of the terminal device to an LMF network element. When the at least one network device is a plurality of network devices, the at least one network device includes a serving network device and a neighboring-cell network device of the terminal device.

In some embodiments, the terminal device may send the direction information of the UE to a serving base station. Correspondingly, the serving base station receives the direction information of the terminal device sent by the UE. Then, the serving base station sends the direction information of the terminal device to the LMF network element. Correspondingly, the LMF network element receives the direction information of the terminal device sent by the serving base station.

In some embodiments, step 601 may be alternatively replaced with that the serving network device sends the direction information of the terminal device to the LMF network element. The serving network device herein is, for example, a serving base station. For example, the serving base station can determine direction information of a direction in which the terminal device is located.

In some embodiments, the direction information of the terminal device may include at least one of the following information: receive beam direction information of the terminal device; transmit beam direction information of the terminal device; angle information of the terminal device relative to the at least one network device; or location information of the terminal device. The at least one network device includes, for example, a serving network device and a neighboring-cell network device of the terminal device.

For example, for application to a downlink positioning method, the receive beam direction information of the UE is, for example, at least one of a PRS resource ID, a PRS resource set ID, an SSB index, or a CSI-RS ID. That is, different IDs or different index values herein indicate different receive beam directions. When receiving at least one of the PRS resource ID, the PRS resource set ID, the SSB index, or the CSI-RS ID, the LMF network element may determine a receive beam direction of the UE.

Similarly, the transmit beam direction information of the terminal device may also be at least one of a PRS resource ID, a PRS resource set ID, an SSB index, or a CSI-RS ID. For application to an uplink positioning method, when receiving at least one of the PRS resource ID, the PRS resource set ID, the SSB index, or the CSI-RS ID, the LMF network element may determine a transmit beam direction of the UE.

The angle information of the terminal device relative to the at least one network device is, for example, AoD information of the UE relative to a serving base station and/or a neighboring-cell base station.

The location information of the terminal device may be understood as location information of the terminal device, for example, a positioning result at a previous moment, or a positioning result obtained by using another positioning method. Coarse location information is, for example, three-dimensional coordinate information of the UE relative to the serving base station and the neighboring-cell base station, or longitude and latitude information of the UE.

For example, the UE may send the direction information of the UE to the LMF network element by using an LPP message. For another example, the UE may send the direction information of the UE to the serving base station by using an RRC message, and then the serving base station sends the direction information of the UE to the LMF network element.

Optionally, the LMF network element may first request positioning assistance data, for example, LPP request assistance data, from the UE by using an LPP message. Certainly, the direction information of the UE may be alternatively carried by using another type of message. This is not limited in this application.

In some embodiments, the serving network device may directly send the direction information of the terminal device to the LMF network element. The direction information of the terminal device may include at least one of the following information: receive beam direction information of the terminal device, transmit beam direction information of the terminal device, or angle information of the terminal device relative to a network device of a serving cell. For the receive beam direction information and the transmit beam direction information herein, refer to the foregoing descriptions. The angle information herein is, for example, an AoA.

For example, if the serving base station of the UE sends the direction information of the UE to the LMF network element, the serving base station may send an NR positioning protocol (NR positioning protocol annex, NRPPa) message to the LMF network element, where the NRPPa message includes the direction information of the UE. In some scenarios, optionally, the LMF network element first requests the direction information of the UE from at least one of the serving base station or the neighboring-cell base station by using a TRP information request (information request) message. In response to the TRP information request message, the at least one of the serving base station or the neighboring-cell base station sends a TRP information response (information request) message to the LMF network element, where the TRP information response message includes the direction information of the UE. Certainly, the message type herein is merely an example for description, and the direction information of the UE may be alternatively reported by using a message of another type.

602: The LMF network element sends the direction information of the terminal device to the at least one network device. Then, step 605 is performed.

In some embodiments, the LMF network element may further process the received direction information of the terminal device, and then send processed direction information to the at least one network device, or the LMF network element may directly forward the received direction information of the terminal device to the at least one network device.

For example, when receiving the direction information of the terminal device, the serving network device and the neighboring-cell network device of the terminal device may determine, based on the direction information of the terminal device, beam information for sending a positioning reference signal to the terminal device. This is equivalent to that the serving network device and the neighboring-cell network device adjust, with reference to the direction information of the terminal device, a beam direction for sending a positioning reference signal. For example, the serving network device and the neighboring-cell network device store a correspondence between a plurality of pieces of direction information of the terminal device and a plurality of pieces of beam information for sending a positioning reference signal, and the serving network device and the neighboring-cell network device may determine, based on the correspondence, the beam direction for sending the positioning reference signal.

603: The LMF network element determines the configuration information of the positioning reference signal based on the direction information of the terminal device, where the configuration information of the positioning reference signal indicates the at least one network device to adjust a beam direction for sending the positioning reference signal.

604: The LMF network element sends the configuration information of the positioning reference signal to the at least one network device.

In some embodiments, the LMF network element sends the configuration information of the positioning reference signal to the serving network device and the neighboring-cell network device of the terminal device. Correspondingly, the serving network device and the neighboring-cell network device receive the configuration information that is of the positioning reference signal and that is sent by the LMF network element.

In some embodiments, the LMF network element may determine, based on the direction information of the terminal device, a positioning reference signal resource identifier used by the serving network device and the neighboring-cell network device to send the positioning reference signal to the terminal device, and generate the configuration information of the positioning reference signal, where the configuration information of the positioning reference signal includes the positioning reference signal resource identifier.

For example, the positioning reference signal is a PRS, the LMF network element stores a correspondence between direction information of the terminal device and a PRS resource ID/beam ID of a PRS, and the LMF network element may determine, based on the direction information of the terminal device, a PRS resource ID/beam ID for sending a PRS by the serving network device and the neighboring-cell network device to the terminal device. The configuration information that is of the positioning reference signal and that is generated by the LMF network element includes the determined PRS resource ID/beam ID for the serving network device and the neighboring-cell network device.

Because different PRS resource IDs/beam IDs correspond to different PRS beam directions, the serving network device and the neighboring-cell network device may send, based on the PRS resource ID/beam ID, a PRS beam on a resource corresponding to the PRS resource ID/beam ID. This is equivalent to that the serving network device and the neighboring-cell network device adjust a beam direction for sending a PRS.

In this way, when the at least one network device is a terrestrial base station/satellite, if the serving base station and the neighboring-cell base station adjust a beam direction for sending a PRS, the UE may receive sufficient PRSs within short time, thereby improving positioning performance of the UE.

Especially in a satellite system, considering that a satellite moves at a high speed, the UE may not receive sufficient PRSs. If this application is applied to report the direction information of the UE, so that a serving satellite and a neighboring satellite adjust a beam direction for sending a PRS to align with a direction of the UE, the UE can receive a large quantity of PRSs within short time to perform positioning measurement.

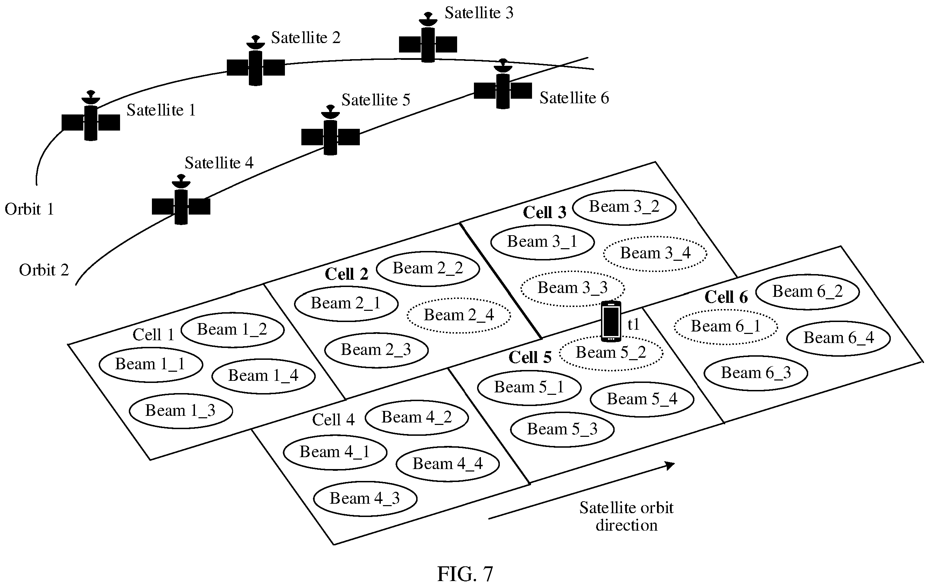

For example, FIG. 7 is a diagram of adjusting, based on direction information of UE, a beam direction for sending a PRS by a satellite. It is assumed that cells sequentially corresponding to a satellite 1 to a satellite 6 are a cell 1 to a cell 6 shown in FIG. 7. A serving satellite of the UE at a moment t1 is the satellite 5, a serving cell is the cell 5, neighboring satellites include the satellite 2, the satellite 3, and the satellite 6, and neighboring cells include the cell 2, the cell 3, and the cell 6. Direction information reported by the UE to the serving satellite indicates that a receive beam of the UE is a beam 5_2. For example, the direction information includes a beam ID of the receive beam 5_2. When the serving satellite receives the direction information of the UE, the serving satellite may determine a neighboring satellite of the serving satellite and a set of beams that are in beams for the neighboring satellite to send a PRS and that can be aligned with the receive beam 5_2 of the UE. For example, the beam set includes a transmit beam 2_4 of the neighboring satellite 2, a transmit beam 3_3 or a transmit beam 3_4 of the neighboring satellite 3, a transmit beam 5_2 of the neighboring satellite 5, and a transmit beam 6_1 of the neighboring satellite 6. The serving satellite may send configuration information of a positioning reference signal to the satellite 2, the satellite 3, the satellite 5, and the satellite 6. The configuration information of the positioning reference signal indicates the satellite 2, the satellite 3, the satellite 5, and the satellite 6 to send a PRS to the UE on a resource indicated by a beam ID in the beam set. This is equivalent to adjusting beam directions for sending a PRS to the UE by the satellite 2, the satellite 3, the satellite 5, and the satellite 6.

605: The serving network device sends the direction information of the terminal device to the neighboring-cell network device.

In some embodiments, the serving network device receives the direction information from the terminal device, and the serving network device sends the direction information of the terminal device to the neighboring-cell network device of the terminal device. Correspondingly, the neighboring-cell network device receives the direction information of the terminal device sent by the serving network device. For example, the serving base station may send the direction information of the UE to the neighboring-cell base station through an Xn interface, and the neighboring-cell base station receives, through the Xn interface, the direction information of the UE sent by the serving base station.

The serving network device and the neighboring-cell network device may determine, based on the direction information of the terminal device, beam information for sending a positioning reference signal to the terminal device. This is equivalent to that the serving network device and the neighboring-cell network device adjust, with reference to the direction information of the terminal device, a beam direction for sending a positioning reference signal.

606: The serving network device sends positioning assistance data to the terminal device.

In some embodiments, for an implementation of the positioning assistance data, refer to the descriptions in Table 1.

In some embodiments, that the serving network device sends the positioning assistance data to the terminal device includes: The serving base station of the UE sends the positioning assistance data to the UE, or the LMF network element sends the positioning assistance data to the UE through the serving base station of the UE.

607: The at least one network device sends the positioning reference signal to the terminal device.

Correspondingly, the terminal device receives the positioning reference signal from the at least one network device.

In some embodiments, the at least one network device herein includes the serving network device and the neighboring-cell network device of the terminal device. The positioning reference signal is, for example, a PRS or an SSB.

Therefore, in this application, for the terminal device, the reported direction information of the terminal device can help the serving base station/LMF network element determine beam directions of positioning reference signals of network devices of a serving cell and a neighboring cell, so that the network devices of the serving cell and the neighboring cell adjust directions for sending positioning reference signals to point to a receiving direction of the terminal device. This helps the terminal device receive sufficient positioning reference signals from the serving cell and the neighboring cell within short time, thereby improving positioning performance and positioning precision of the terminal device, and reducing a positioning delay of the terminal device.

In addition, for the network devices of the serving cell and the neighboring cell of the terminal device, if the beam directions for sending the positioning reference signals by the network devices are adjusted based on the direction information of the terminal device, it is equivalent to that the network devices may determine, based on the direction information of the terminal device, the beam directions for sending the positioning reference signals by the network devices to the terminal device. This can avoid a problem that power consumption of the network device is high because the terminal device requests a positioning reference signal from the network device for a plurality of times when the terminal device cannot be positioned, and help reduce the power consumption of the network device.

In some embodiments, the embodiment corresponding to FIG. 4 and the embodiment corresponding to FIG. 6 may be used in combination. To be specific, the terminal device may perform the step of receiving, by the terminal device, the positioning assistance information in this application, to indicate the terminal device to receive a PRS on a PRS resource/SSB that has an association relationship and that is indicated by the positioning assistance information. Optionally, the terminal device may further send the direction information of the terminal device, so that a network side determines a beam direction in which the at least one network device sends a positioning reference signal to the terminal device. In this way, not only positioning reference signal reception power consumption and measurement power consumption of the terminal device are reduced, but also the terminal device can receive sufficient positioning reference signals, thereby improving positioning performance.

In some scenarios, although an example in which the reference signal/positioning reference signal is a PRS or an SSB is used for description in embodiments of this application, in some other scenarios, the reference signal/positioning reference signal may alternatively be at least one of the following information: a channel state information-reference signal (channel state information-reference signal, CSI-RS); a demodulation reference signal (demodulation reference signal, DM-RS); a tracking reference signal (tracking reference signal, TRS); or a phase-tracking reference signal (phase-tracking reference signal, PT-RS). Certainly, the reference signal/positioning reference signal may alternatively be of a type other than the signal type in the example in embodiments of this application.

It may be understood that, to implement the functions in the foregoing embodiments, the terminal device and the network device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

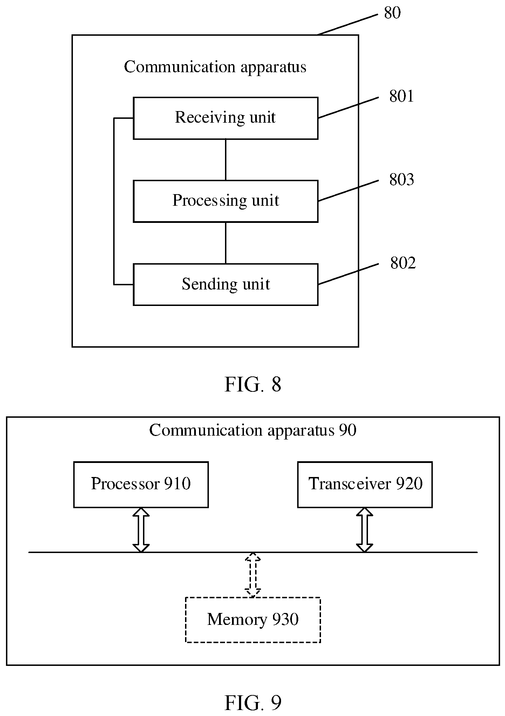

FIG. 8 and FIG. 9 are diagrams of structures of possible communication apparatuses according to an embodiment of this application. These communication apparatuses may be configured to implement a function of the terminal device or the network device in the foregoing method embodiments. Therefore, beneficial effects of the foregoing method embodiments can also be achieved. In embodiments of this application, the communication apparatus may be one of the terminal device or the network device (for example, an eNB/gNB/LMF network element) or the LMF network element shown in FIG. 1, or may be one of the terminal device or the network device (for example, a satellite/base station) shown in FIG. 2a and FIG. 2b, or may be a communication module (for example, a chip or a chipset) used in these devices. A related communication apparatus is configured to implement signal transmission, for example, may be configured to transmit the positioning reference signal described above.

As shown in FIG. 8, a communication apparatus 80 includes a receiving unit 801, a sending unit 802, and a processing unit 803. The communication apparatus 80 is configured to implement the function of the terminal device, the network device, or the LMF network element in the method embodiments shown in FIG. 4 and FIG. 6.

When the communication apparatus 80 is configured to implement the function of the terminal device in the method embodiments shown in FIG. 4 and FIG. 6, the receiving unit 801 may be configured to receive positioning assistance information, receive a reference signal/positioning reference signal, and receive positioning assistance data. The sending unit 802 may be configured to send direction information of the terminal device and send measurement information. The processing unit 803 may be configured to perform positioning measurement and location calculation.

When the communication apparatus 80 is configured to implement the function of the network device in the method embodiments shown in FIG. 4 and FIG. 6, the receiving unit 801 is configured to receive direction information of a terminal device and configuration information of a positioning reference signal. The sending unit 802 is configured to send positioning assistance information, positioning assistance data, and a reference signal/positioning reference signal. The processing unit 803 may be configured to determine, based on the configuration information of the positioning reference signal, beam information for the network device to send the positioning reference signal.

When the communication apparatus 80 is configured to implement the function of the LMF network element in the method embodiments shown in FIG. 4 and FIG. 6, the receiving unit 801 may be configured to receive measurement information sent by a terminal device and receive direction information of the terminal device. The sending unit 802 may be configured to send positioning assistance information, configuration information of a positioning reference signal, and the like. The processing unit 803 may be configured to determine the configuration information of the positioning reference signal.

For more detailed descriptions of the receiving unit 801, the sending unit 802, and the processing unit 803, refer to related descriptions in the method embodiments in FIG. 4 and FIG. 6.

As shown in FIG. 9, a communication apparatus 90 includes a processor 910, and optionally further includes a transceiver 920. The processor 910 and the transceiver 920 are coupled to each other. It may be understood that the transceiver 920 may be an interface circuit or an input/output interface. Optionally, the communication apparatus 90 may further include a memory 930, configured to: store instructions executed by the processor 910, or store input data required for running instructions by the processor 910, or store data generated after the processor 910 runs instructions.

When the communication apparatus 90 is configured to implement the methods shown in FIG. 4 and FIG. 6, the processor 910 is configured to implement the function of the processing unit 803, and the transceiver 920 is configured to implement the functions of the receiving unit 801 and the sending unit 802; or the processor 910 is configured to implement the methods shown in FIG. 4 and FIG. 6. The transceiver 920 may be an interface chip, or may be an independent IP module integrated in an interface chip.

When the communication apparatus 90 is an interface chip used in a terminal device, the interface chip of the terminal device implements the function of the terminal device in the foregoing method embodiments. The interface chip of the terminal device sends data to a network device/LMF network element. This may be understood as that the data is first generated by another module (for example, a source data component) in the terminal device, and then sent by the module to the interface chip of the terminal device.

When the communication apparatus 90 is an interface chip used in a network device/LMF network element, the interface chip of the network device/LMF network element implements the function of the network device/LMF network element in the foregoing method embodiments. The interface chip on a receiving side receives data from a terminal device. This may be understood as that the data is first received by the interface chip of the network device/LMF network element, and then sent to a data processing component of the terminal device by the interface chip of the network device/LMF network element.

In this application, that an entity A sends information to an entity B may be that A directly sends the information to B, or may be that A indirectly sends the information to B via another entity. Similarly, that an entity B receives information from an entity A may be that the entity B directly receives the information sent by the entity A, or may be that the entity B indirectly receives, via another entity, the information sent by the entity A. The entities A and B herein may be a sending side or a receiving side, or may be modules inside a sending side or a receiving side. Data sending and receiving may be information exchange between a sending side and a receiving side, for example, information exchange between a source device and a sink device. Data sending and receiving may alternatively be information exchange between different modules in one apparatus, for example, information exchange between an interface chip on a sending side and an interface chip on a receiving side.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

The method steps in embodiments of this application may be implemented in hardware, or may be implemented in software instructions that can be executed by a processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well-known in the art. An example storage medium is coupled to a processor, so that the processor can read information from the storage medium and can write information into the storage medium. The storage medium may alternatively be a part of the processor. The processor and the storage medium may be located in an ASIC. In addition, the ASIC may be located in a base station or a terminal. The processor and the storage medium may exist in the base station or the terminal as discrete components.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device such as a server or a data center integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" usually indicates an "or" relationship between associated objects. "Including at least one of A, B, or C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

## Claims

1. A communication method, comprising:
receiving positioning assistance information, wherein the positioning assistance information indicates that first configuration information is associated with second configuration information, the first configuration information comprises configuration information of a first reference signal sent by a first network device, and the second configuration information comprises configuration information of a second reference signal sent by a second network device; and
performing at least one of the following steps:
receiving a reference signal from the first network device based on the first configuration information; or
receiving a reference signal from the second network device based on the second configuration information.

2. The method according to claim 1, wherein
the positioning assistance information comprises the first configuration information and the second configuration information.

3. The method according to claim 1 or 2, wherein the first configuration information comprises at least one of the following:
resource information of the first reference signal;
resource set information of the first reference signal;
information about the first network device;
frequency information of the first reference signal;
a cell identifier corresponding to the first network device; or
an index of the first reference signal.

4. The method according to claim 3, wherein the resource information of the first reference signal comprises at least one of the following:
a resource identifier of the first reference signal;
beam information of the first reference signal; or
angle information of the first reference signal.

5. The method according to any one of claims 1 to 4, wherein the reference signal is at least one of the following:
a positioning reference signal PRS; or
a synchronization signal and physical broadcast channel PBCH block SSB.

6. The method according to claim 5, wherein the positioning assistance information indicates that a PRS from the first network device is associated with a PRS or an SSB from the second network device.

7. The method according to any one of claims 1 to 6, wherein receiving the positioning assistance information comprises:
receiving the positioning assistance information from the first network device.

8. The method according to any one of claims 1 to 6, wherein receiving the positioning assistance information comprises:
receiving the positioning assistance information from a location management function network element.

9. A communication method, comprising:
determining positioning assistance information, wherein the positioning assistance information indicates that first configuration information is associated with second configuration information, the first configuration information comprises configuration information of a first reference signal sent by a first network device, and the second configuration information comprises configuration information of a second reference signal sent by a second network device; and
sending the positioning assistance information.

10. The method according to claim 9, wherein
the positioning assistance information comprises the first configuration information and the second configuration information.

11. The method according to claim 9 or 10, wherein the first configuration information comprises at least one of the following:
resource information of the first reference signal;
resource set information of the first reference signal;
information about the first network device;
frequency information of the first reference signal;
a cell identifier corresponding to the first network device; or
an index of the first reference signal.

12. The method according to claim 11, wherein the resource information of the first reference signal comprises at least one of the following:
a resource identifier of the first reference signal;
beam information of the first reference signal; or
angle information of the first reference signal.

13. The method according to any one of claims 9 to 12, wherein the reference signal is at least one of the following:
a positioning reference signal PRS; or
a synchronization signal and physical broadcast channel PBCH block SSB.

14. The method according to claim 13, wherein the positioning assistance information indicates that a PRS sent by the first network device is associated with a PRS or an SSB sent by the second network device.

15. The method according to any one of claims 9 to 14, wherein sending the positioning assistance information comprises:
sending the positioning assistance information to a terminal device.

16. A communication method, wherein the method comprises:
sending direction information of a terminal device, wherein the direction information is used by at least one network device to determine configuration information of a positioning reference signal; and
receiving the positioning reference signal from the at least one network device.

17. The method according to claim 16, wherein the direction information comprises at least one of the following information:
receive beam direction information of the terminal device;
transmit beam direction information of the terminal device;
angle information of the terminal device relative to the at least one network device; or
location information of the terminal device.

18. The method according to claim 16 or 17, wherein
the at least one network device comprises a first network device and at least one second network device;
first configuration information of the first network device is associated with second configuration information of the at least one second network device; and
the first configuration information comprises configuration information of a first reference signal sent by the first network device, and the second configuration information comprises configuration information of a second reference signal sent by the second network device.

19. The method according to claim 18, wherein the first network device is a serving network device of the terminal device.

20. A communication method, wherein the method comprises:
receiving direction information of a terminal device, wherein the direction information is used by at least one network device to determine configuration information of a positioning reference signal; and
sending the positioning reference signal.

21. The method according to claim 20, wherein the direction information comprises at least one of the following information:
receive beam direction information of the terminal device;
transmit beam direction information of the terminal device;
angle information of the terminal device relative to the at least one network device; or
location information of the terminal device.

22. The method according to claim 20 or 21, wherein
the at least one network device comprises a first network device and at least one second network device;
first configuration information of the first network device is associated with second configuration information of the at least one second network device; and
the first configuration information comprises configuration information of a first reference signal sent by the first network device, and the second configuration information comprises configuration information of a second reference signal sent by the second network device.

23. The method according to claim 22, wherein the first network device is a serving network device of the terminal device.

24. A communication apparatus, comprising a module configured to perform the method according to any one of claims 1 to 23.

25. A communication apparatus, comprising one or more processors, wherein the one or more processors are configured to perform the method according to any one of claims 1 to 23.

26. A computer-readable storage medium, wherein the computer-readable storage medium stores computer instructions, and when the computer instructions are run on a communication apparatus, the communication apparatus is enabled to perform the method according to any one of claims 1 to 23.

27. A computer program product, comprising computer instructions, wherein when the computer instructions are run on a communication apparatus, the communication apparatus is enabled to perform the method according to any one of claims 1 to 23.

28. A chip, wherein the chip stores computer-executable instructions, and when the computer-executable instructions are run, the method according to any one of claims 1 to 23 is performed.

29. A communication system, comprising a first communication apparatus and a second communication apparatus, wherein the first communication apparatus is configured to perform the method according to any one of claims 1 to 8, and the second communication apparatus is configured to perform the method according to any one of claims 9 to 15, or the first communication apparatus is configured to perform the method according to any one of claims 16 to 19, and the second communication apparatus is configured to perform the method according to any one of claims 20 to 23.
